(19)

Europäisches Patentamt

European Patent Office

Office européen des brevets

(11) **EP 4 757 387 A1**

(12) **EUROPEAN PATENT APPLICATION**
published in accordance with Art. 153(4) EPC

(43) Date of publication:
**10.06.2026 Bulletin 2026/24**

(21) Application number: **24861806.8**

(22) Date of filing: **16.08.2024**

(51) International Patent Classification (IPC):
**H04W 24/02** (2009.01)

(52) Cooperative Patent Classification (CPC):
**H04W 24/02**

(86) International application number:
**PCT/CN2024/112705**

(87) International publication number:
**WO 2025/050962 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.09.2023 CN 202311158590**

(71) Applicant: **HUAWEI TECHNOLOGIES CO., LTD.
Shenzhen 518129 (CN)**

(72) Inventor: **FAN, Bo
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **BEAM MEASUREMENT AND INDICATION METHOD AND RELATED APPARATUS**

(57)    A beam measurement and indication method and a related apparatus are provided. The method includes: receiving first indication information, where the first indication information includes information about at least one first resource; and performing measurement based on the information about the at least one first resource. The at least one first resource may be an available resource, for example, may be a part of resources with good or optimal channel quality in the resources. Channel quality of a beam is measured based on the received information about the at least one first resource, so that a beam measurement delay can be reduced.

FIG. 6

**Description**

## TECHNICAL FIELD

## BACKGROUND

## SUMMARY

**Description**

This application claims priority to Chinese Patent Application No. 202311158590.6, filed with the China National Intellectual Property Administration on September 6, 2023 and entitled "BEAM MEASUREMENT AND INDICATION METHOD AND RELATED APPARATUS", which is incorporated herein by reference in its entirety.

## TECHNICAL FIELD

This application relates to the communication field, and in particular, to a beam measurement and indication method and a related apparatus.

## BACKGROUND

During uplink and downlink transmission, a network device and a terminal device may determine an appropriate beam through beam measurement to implement signal transmission. Specifically, the network device may send different resources by using different beams, and the terminal device may determine quality of each beam by measuring each resource. The terminal device feeds back the measured resource quality, and the network device may determine quality of a corresponding beam based on the measured resource quality fed back by the terminal device. Therefore, an available beam, for example, a beam with optimal or good quality, is used for transmission.

Generally, the terminal device needs to obtain quality of a channel between each transmission beam of the network device and each reception beam of the terminal device by using a plurality of measurement periodicities. Therefore, beam measurement is time-consuming. When an available transmission beam, for example, an optimal transmission beam, and a corresponding optimal reception beam change (for example, when the terminal device moves), it may take long time to identify a new available transmission beam and a corresponding reception beam, for example, a new optimal transmission beam and a corresponding optimal reception beam, causing an excessively long delay. Therefore, how to reduce a beam measurement delay is a problem that needs to be resolved.

## SUMMARY

This application provides a beam measurement and indication method and a related apparatus, to reduce a beam measurement delay and improve transmission performance.

According to a first aspect, an embodiment of this application provides a beam measurement method. The method may be performed by a terminal device, may be performed by a component (for example, a chip or a chip system) configured in the terminal device, or may be implemented by a logical module or software that can implement all or a part of functions of the terminal device. This is not limited in this application.

For example, the method includes: receiving first indication information, where the first indication information includes information about at least one first resource; and performing measurement based on the information about the at least one first resource.

Before the measurement is performed based on the information about the at least one first resource, a reference signal sent by a network device may be first received. The reference signal may include one or more of a channel state information reference signal (channel state information reference signal, CSI-RS), a cell-specific reference signal (cell-specific reference signal, CS-RS), a user equipment-specific reference signal (user equipment-specific reference signal, US-RS), a demodulation reference signal (demodulation reference signal, DMRS), and a synchronization signal/physical broadcast channel block (synchronization signal/physical broadcast channel block, SS/PBCH block). It may be understood that, when the measurement is performed based on the information about the at least one first resource, the reference signal sent by the network device may be measured based on the at least one first resource, and a result obtained by measuring the reference signal is channel quality corresponding to the first resource (that is, channel quality of the first resource), or channel quality corresponding to a beam (that is, channel quality of the beam). The beam is a beam corresponding to the first resource. Therefore, it may be understood that beam measurement may also be referred to as reference signal measurement. In the foregoing technical solution, the at least one first resource may be a resource that meets a channel quality requirement or an appropriate resource. For example, the at least one first resource may be a part of resources with good channel quality in the resources. The channel quality corresponding to the beam is measured based on the received information about the at least one first resource, so that a beam measurement delay can be reduced.

With reference to the first aspect, in some possible implementations of the first aspect, the method may further include: sending first report information when a first condition is met, where the first report information includes information about a fourth resource, and the fourth resource is a resource, in the at least one first resource, whose channel quality is better than channel quality corresponding to a third resource; and the first condition includes at least one of the following: the channel quality corresponding to the third resource is lower than a first threshold; a channel quality decrement corresponding to the third resource exceeds a second threshold; and channel quality corresponding to at least k first resources is better than the channel quality corresponding to the third resource, where k is a positive integer.

It may be understood that the fourth resource belongs to the first resource. In other words, the fourth resource is one or more of the at least one first resource. In addition, channel quality corresponding to the fourth resource is better than quality of the third resource. Better than may mean greater than or equal to, or higher than or equal to. In the foregoing technical solution, the first condition is used to identify whether an available beam, for example, a beam with good or optimal channel quality, changes. When the first condition is met, the first report information is sent, so that the network device can learn of a latest beam situation in a timely manner, and use a good or optimal beam for communication, thereby improving transmission performance. However, when the first condition is not met, it indicates that the channel quality corresponding to the beam does not change greatly, transmission performance is not affected, and the first report information may not be sent, so that communication resources can be saved.

According to a second aspect, this application provides a beam indication method. The method may be performed by a network device, may be performed by a component (for example, a chip or a chip system) configured in the network device, or may be implemented by a logical module or software that can implement all or a part of functions of the network device. This is not limited in this application.

For example, the method includes: sending first indication information, where the first indication information includes information about at least one first resource.

In the foregoing technical solution, the information about the at least one first resource is sent, so that a terminal device can measure channel quality of a beam based on the at least one first resource, and a beam measurement delay can be reduced.

With reference to the second aspect, in some possible implementations of the second aspect, the method may further include: receiving first report information, where the first report information includes information about a fourth resource, and the fourth resource is a resource, in the first resource, whose channel quality is better than channel quality corresponding to a third resource.

In the foregoing technical solution, the first report information includes the information about the fourth resource, and the fourth resource is the resource, in the first resource, whose channel quality is better than the channel quality of the third resource. After receiving the first report information, the network device may update an available beam, for example, a beam with optimal or good channel quality, so that the updated optimal or good beam can be used for communication, thereby improving transmission performance.

With reference to the first aspect and the second aspect, in some possible implementations, the first indication information is medium access control-control element MAC-CE signaling.

In other words, the medium access control-control element (medium access control-control element, MAC-CE) signaling sent by the network device to the terminal device may include the information about the at least one first resource. The MAC-CE signaling may also be referred to as media access control-control element (media access control-control element) signaling.

With reference to the first aspect and the second aspect, in some possible implementations, the first indication information is medium access control-control element MAC-CE signaling and radio access control (radio resource control, RRC) signaling.

In other words, the MAC-CE signaling and the RRC signaling that are sent by the network device to the terminal device may include the information about the at least one first resource.

With reference to the first aspect and the second aspect, in some possible implementations, the first indication information is radio access control RRC signaling.

In other words, the RRC signaling sent by the network device to the terminal device may include the information about the at least one first resource.

With reference to the first aspect and the second aspect, in some possible implementations, the first indication information includes at least one of the following: a resource set corresponding to the at least one first resource, a quantity of the at least one first resource, an index of the at least one first resource, beam information of the at least one first resource, time-frequency resource mapping information of the at least one first resource, power information of the at least one first resource, scrambling index information of the at least one first resource, periodicity information of the at least one first resource, slot information of the at least one first resource, resource configuration information corresponding to the at least one first resource, and report configuration information corresponding to the at least one first resource.

The information about the at least one first resource is sent to the terminal device, so that the terminal device can measure, based on the received information about the at least one first resource, a reference signal corresponding to the first resource, to obtain channel quality of a beam corresponding to the at least one first resource.

With reference to the first aspect and the second aspect, in some possible implementations, same first information is used for the at least one first resource, and the first information includes at least one of the following: beam information, time-frequency resource mapping information, power information, scrambling index information, periodicity information, and slot information.

That the same first information is used for the at least one first resource may be understood as that when the same first information is used for the at least one first resource, the first indication information may include one piece of first information, and the first information is information shared by the at least one first resource. The first indication information does not need to include a plurality of pieces of same first information. In other words, a same piece of first information is used for the at least one first resource. Therefore, in the foregoing technical solution, the same first information is used for the at least one first resource, so that a waste of transmission resources can be reduced.

With reference to the first aspect and the second aspect, in some possible implementations, the information about the at least one first resource is used to update information about a resource in a resource set configured by using the radio access control RRC signaling. Optionally, the first indication information includes information about the resource set.

In other words, before the first indication information is received, a step of receiving information about the resource in the resource set configured by using the RRC signaling may be further included. The resource in the resource set configured by using the RRC signaling may include the at least one first resource, that is, initial information about the at least one first resource may be configured by using the RRC signaling, and subsequently, the information about the at least one first resource may be updated by using the MAC-CE signaling. Further, to determine, by using the MAC-CE signaling, a resource set to which the resource that needs to be updated belongs, the first indication information may include information about the resource set, for example, one or more of an index of the resource set, an index of a first resource in the resource set, and information about the first resource in the resource set.

With reference to the first aspect and the second aspect, in some possible implementations, the first indication information includes information about at least one second resource, the at least one first resource is associated with the at least one second resource in a one-to-one manner; and the information about the at least one second resource includes an index of a resource set corresponding to the at least one second resource and/or an index of the at least one second resource.

After receiving the first indication information, the terminal device may determine the at least one second resource based on the index of the set of the at least one second resource and/or the index of the at least one second resource included in the first indication information, to obtain the information about the at least one second resource.

With reference to the first aspect and the second aspect, in some possible implementations, second information of a second resource associated with each first resource is used for the first resource; or second information of each first resource is determined based on second information of a second resource associated with the first resource.

That the second information of the second resource associated with each first resource is used for the first resource is that the second information of the second resource associated with the first resource is used as the second information of the first resource. Alternatively, the second information of the first resource is determined based on the second information of the second resource associated with the first resource. In the foregoing technical solution, the information about the second resource includes the second information of the second resource. By associating with the at least one second resource, the second information of the second resource associated with the first resource is used as the second information of the first resource, or the second information of the first resource is determined based on the second information of the second resource associated with the first resource. This can reduce use of transmission resources and improve transmission performance.

With reference to the first aspect and the second aspect, in some possible implementations, the first indication information further includes a second information offset, and second information of each first resource is determined based on second information of a second resource associated with the first resource and the second information offset.

In other words, the first resource is determined based on the second information of the second resource associated with the first resource and the second information offset instead of the second information of the second resource associated with the first resource.

With reference to the first aspect and the second aspect, in some possible implementations, the second information includes at least one of the following: beam information, time-frequency resource mapping information, power information, scrambling index information, periodicity information, and slot information.

In other words, the beam information of the first resource may be beam information of the second resource associated with the first resource. The first resource may use time-frequency resource mapping information of the second resource associated with the first resource. The first resource may use power information of the second resource associated with the first resource. The first resource may use scrambling index information of the second resource associated with the first resource. The first resource may use periodicity information of the second resource associated with the first resource. The first resource may use slot information of the second resource associated with the first resource. Alternatively, the beam information of the first resource may be determined based on beam information of the second resource and a beam offset. The time-frequency resource mapping information of the first resource may be determined based on time-frequency resource mapping information of the second resource and a time-frequency resource offset. The power information of the first resource may be determined based on power information of the second resource and a power offset. The scrambling index information of the first resource may be determined based on scrambling index information of the second resource and a scrambling index offset. The periodicity information of the first resource may be determined based on periodicity information of the second resource and a periodicity offset. The slot information of the first resource may be determined based on slot information of the second resource and a slot offset.

With reference to the first aspect and the second aspect, in some possible implementations, information about the third resource is configured by using RRC signaling, or the information about the third resource is included in the first indication information, or the third resource is an $n^{th}$ first resource in the at least one first resource, where n is a positive integer.

In the foregoing technical solution, the third resource may be indicated, so that the terminal device determines, based on the third resource, whether channel quality of a beam corresponding to the at least one first resource changes.

With reference to the first aspect and the second aspect, in some possible implementations, the first report information includes at least one of the following: an index of the fourth resource, channel state information of the fourth resource, channel state information of the third resource, and an index of the third resource.

In the foregoing technical solution, the first report information includes at least one of the index of the fourth resource, the channel state information of the fourth resource, the channel state information of the third resource, and the index of the third resource, so that the network device can update an available beam in a timely manner based on the first report information, for example, an optimal beam and/or a good beam.

According to a third aspect, this application provides a communication apparatus, to implement the method according to any one of the first aspect and the possible implementations of the first aspect or the method according to any one of the second aspect and the possible implementations of the second aspect. The apparatus includes a corresponding unit configured to perform the foregoing method. The unit included in the apparatus may be implemented by software and/or hardware.

According to a fourth aspect, this application provides a communication apparatus. The apparatus includes a processor. The processor is coupled to a memory, and may be configured to execute a computer program in the memory, to implement the method according to any one of the first aspect and the possible implementations of the first aspect or the method according to any one of the second aspect and the possible implementations of the second aspect.

Optionally, the apparatus further includes a communication interface, and the processor is coupled to the communication interface. The communication interface is configured to: receive a signal from a communication device other than the device and transmit the signal to the processor, or send a signal from the processor to a communication device other than the device. For example, the communication interface may be a transceiver, a circuit, a bus, a module, or a communication interface of another type.

Optionally, the apparatus further includes the memory, and the processor is coupled to the memory. The memory is configured to store program instructions and data.

According to a fifth aspect, this application provides a computer-readable storage medium. The computer-readable storage medium stores a computer program or instructions. When the computer program or the instructions are executed, the method according to any one of the first aspect and the possible implementations of the first aspect or the method according to any one of the second aspect and the possible implementations of the second aspect is implemented.

According to a sixth aspect, this application provides a computer program product. The computer program product includes instructions. When the instructions are run, the method according to any one of the first aspect and the possible implementations of the first aspect or the method according to any one of the second aspect and the possible implementations of the second aspect is implemented.

According to a seventh aspect, this application provides a chip system. The chip system includes at least one processor, configured to support implementation of a function in any one of the first aspect and the possible implementations of the first aspect, or configured to support implementation of a function in any one of the second aspect and the possible implementations of the second aspect, for example, receiving or processing data in the foregoing methods.

In a possible design, the chip system further includes a memory, the memory is configured to store program instructions and data, and the memory is located inside or outside the processor.

The chip system may include a chip, or may include a chip and another discrete device.

According to an eighth aspect, this application provides a communication system, including: a terminal device, configured to implement the method according to any one of the first aspect and the possible implementations of the first aspect; and a network device, configured to implement the method according to any one of the second aspect and the possible implementations of the second aspect.

It should be understood that technical solutions of the third aspect to the eighth aspect of this application correspond to the technical solutions of the first aspect and the second aspect of this application, and beneficial effects achieved by the aspects and corresponding feasible implementations are similar. Details are not described herein again.

## BRIEF DESCRIPTION OF DRAWINGS

FIG. 1 is a possible and non-restrictive diagram of a system according to an embodiment of this application;

FIG. 2 is a diagram of beam management according to an embodiment of this application;

FIG. 3 is another diagram of beam management according to an embodiment of this application;

FIG. 4 is a diagram of a system architecture of a communication system according to an embodiment of this application;

FIG. 5 is a diagram of communication performed by a communication apparatus according to an embodiment of this application;

FIG. 6 is a schematic flowchart of a beam measurement method according to an embodiment of this application;

FIG. 7 is a block diagram of a communication apparatus according to an embodiment of this application;

FIG. 8 is another block diagram of a communication apparatus according to an embodiment of this application;

FIG. 9 is still another block diagram of a communication apparatus according to an embodiment of this application;

FIG. 10 is a diagram of a structure of a network device according to an embodiment of this application; and

FIG. 11 is a diagram of a structure of a terminal device according to an embodiment of this application.

## DESCRIPTION OF EMBODIMENTS

The following describes the technical solutions of this application with reference to the accompanying drawings.

The technical solutions provided in this application may be applied to various communication systems.

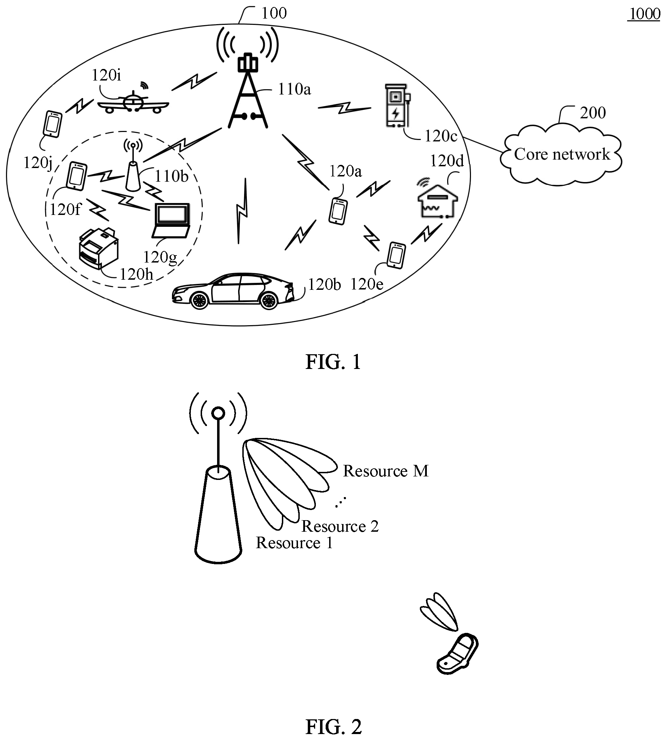

FIG. 1 is a possible and non-restrictive diagram of a system according to an embodiment of this application. As shown in FIG. 1, the communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

Alternatively, the RAN node 110 may be sometimes referred to as a network device, an access network device, a RAN entity, an access node, or the like, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be disposed separately, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

To better understand the methods provided in embodiments of this application, the following briefly describes terms in this application.

1. Beam: The beam may be understood as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, a transmission configuration indicator (transmission configuration indicator, TCI) state (state), a spatial relation (spatial relation), or the like. Therefore, in this application, concepts such as the beam, the spatial domain filter, the spatial filter, the spatial domain parameter, the spatial parameter, the spatial domain setting, the spatial setting, the QCL information, the QCL assumption, the QCL indication, the TCI state (including an uplink TCI state or a downlink TCI state), or the spatial relation are equivalent. The foregoing concepts may be used interchangeably.

A beam used for sending a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a downlink TCI-state.

A beam used for receiving a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), a spatial reception setting (spatial reception setting), or the like.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

Optionally, a plurality of beams having same or similar communication features are considered as one beam. The beam may include one or more antenna ports for transmission of a data channel, a control channel, a sounding signal, and the like. The one or more antenna ports forming the beam may also be considered as one antenna port set.

2. Reference signal and reference signal resource: The reference signal may be used for channel measurement, channel estimation, beam measurement, or the like. The reference signal resource may be used for configuring a transmission attribute of the reference signal, for example, a time-frequency resource position, a port mapping relationship, a power factor, and a scrambling code. A transmit end device may send the reference signal based on the reference signal resource, and a receive end device may receive the reference signal based on the reference signal resource.

In beam measurement, there is a correspondence between a beam and a reference signal resource. The reference signal resource may be an uplink reference signal resource or a downlink reference signal resource. The uplink reference signal includes, but is not limited to, a sounding reference signal (sounding reference signal, SRS) and a demodulation reference signal (demodulation reference signal, DMRS). The downlink reference signal includes, but is not limited to, a CSI-RS, a cell-specific reference signal (cell-specific reference signal, CS-RS), a UE-specific reference signal (user equipment-specific reference signal, US-RS), a demodulation reference signal (demodulation reference signal, DMRS), and a synchronization signal/physical broadcast channel block (synchronization signal/physical broadcast channel block, SS/PBCH block). The SS/PBCH block may be referred to as an SSB for short.

The reference signal resource is configured by using an RRC message. In terms of a configuration structure, a resource is an information element (information element, IE), including a related parameter of an uplink/a downlink reference signal corresponding to the resource, for example, a type of the uplink/downlink reference signal, a resource element carrying the uplink/-downlink reference signal, sending time and a periodicity of the uplink/downlink reference signal, and a quantity of ports used for sending the uplink/downlink reference signal. Each uplink/downlink reference signal resource has a unique index to identify the reference signal resource. It may be understood that an index of a reference signal resource may also be referred to as an identifier of the reference signal resource. This is not limited in embodiments of this application.

In addition, in this application, a parameter used for measuring beam quality includes received signal strength (received signal strength indicator, RSSI), reference signal received power (reference signal received power, RSRP), and the like, but this is not limited herein. For example, the beam quality may alternatively be measured based on parameters such as reference signal received quality (reference signal received quality, RSRQ), a signal-to-noise ratio (signal-to-noise ratio, SNR), a signal to interference plus noise ratio (signal to interference plus noise ratio, SINR, signal to interference plus noise ratio for short), a precoding matrix indicator (precoding matrix indicator, PMI), a transmitted precoding matrix indicator (transmitted precoding matrix indicator, TPMI), a rank indicator (rank indicator, RI), a transmitted rank indicator (transmitted rank indicator, TRI), a layer indicator (layer indicator, LI), and a timing advance (timing advance, TA).

It should be understood that the reference signal and the corresponding reference signal resource listed above are merely examples for description, and shall not constitute any limitation on this application. This application does not exclude a possibility of defining another reference signal in a future protocol to implement a same or similar function.

3. TCI state: During uplink and downlink transmission, both a network device and a terminal device need to use a correct beam to implement high quality transmission. During downlink transmission, the network device needs to indicate, to the terminal device, which downlink transmission beam is being used by the network device, so that the terminal device knows which reception beam to use for receiving. During uplink transmission, the network device also needs to indicate, to the terminal device, which uplink transmission beam needs to be used by the terminal device, as the network device knows which beam is available for the terminal device, for example, a best (optimal) beam. Both an uplink beam and a downlink beam may be indicated by using a TCI state. For example, a beam used for downlink transmission is indicated by using a downlink TCI state, and a beam used for uplink transmission is indicated by using an uplink TCI state. In the 3rd generation partnership project (3rd generation partnership project, 3GPP) protocol, the network device indicates a specific TCI state to the terminal device by using a TCI field in downlink control information (downlink control information, DCI). The TCI field has a size of 3 bits (bit), and may specifically represent eight different field values (codepoint). Each field value of the TCI field may be associated with one TCI state index. The TCI state index may uniquely identify one TCI state, and the TCI state may be a downlink TCI state or an uplink TCI state. Alternatively, each field value of the TCI field may be associated with two TCI state indexes. The two TCI state indexes may uniquely identify two TCI states. The two TCI states may be one downlink TCI state and one uplink TCI state, or may be two downlink TCI states or two uplink TCI states.

The downlink TCI state includes several parameters, and the terminal device may determine, based on the parameters, related information about a downlink transmission beam, to determine a reception beam to be used. The TCI state is configured by the network device for each terminal device. Each TCI state includes one TCI index "tci-StateId" and two pieces of QCL information "QCL-Info". Each piece of "QCL-Info" includes one reference signal resource, to indicate that a same downlink timing, frequency offset, or reception beam as that for the reference signal resource should be used in downlink transmission in the TCI state. A specific one to be used depends on a type of "QCL-Info", that is, another field QCL type "qcl-Type" of "QCL-Info". "qcl-Type" may have four values, which are respectively type (type) A, type B, type C, or type D. If the type is type A, type B, or type C, same downlink timing information and frequency offset information as those for the reference signal resource should be used in downlink transmission in the TCI state. If the type is type D, the same reception beam as that for the reference signal resource should be used in downlink transmission in the TCI state. In the two pieces of "QCL-Info", a type of one piece of "QCL-Info" is type D, and a type of the other piece of "QCL-Info" is type A, type B, or type C. The terminal device may determine, based on "QCL-Info" of type D, which reception beam is used for receiving in corresponding downlink transmission. Specifically, the following steps are performed.

    (1) The network device indicates a downlink TCI state (indicated by a TCI field) in downlink transmission to the terminal device based on DCI.

(2) The terminal device determines a reference signal resource in "QCL-Info" of type D in the TCI state.

(3) Determine a reception beam corresponding to the downlink transmission as a reception beam for the reference signal resource. It should be understood that, through a beam management procedure, the terminal device may determine a relatively good (good) reception beam for receiving the reference signal resource, and may use the reception beam as the reception beam for the reference signal resource.

Similarly, an uplink TCI state includes one reference signal resource, to indicate that a same uplink transmission beam as that for the reference signal resource should be used in uplink transmission in the TCI state. The terminal device may determine, based on the reference signal resource, which transmission beam is used for sending in corresponding uplink transmission. In the uplink TCI state, the reference signal resource is not included in "QCL-Info", and QCL types are not distinguished. This is because: There is no need to reference uplink timing information and frequency offset information, and only an uplink transmission beam needs to be referenced. Specifically, the following steps are performed.

(1) The network device indicates an uplink TCI state (indicated by a TCI field) in downlink transmission to the terminal device based on DCI.

(2) The terminal device determines a reference signal resource in the TCI state.

(3) Determine a transmission beam corresponding to the uplink transmission as a transmission beam for the reference signal resource.

It should be understood that, for structures of the uplink TCI state and the downlink TCI state, refer to a known protocol. Details are not described herein.

4. Beam management

The beam management may be classified into downlink beam management and uplink beam management.

(1) Downlink beam management

The downlink beam management mainly includes the following steps.

S1: A network device sends measurement configuration information to a terminal device. The network device sends the measurement configuration information to the terminal device by using an RRC message, and the measurement configuration information mainly includes two parts: resource configuration information and report configuration information. The resource configuration information is information related to a reference signal resource, and is configured by using a three-level structure (resource configuration (resourceConfig)-resource set (resourceSet)-resource (resource)) in a protocol. The network device may configure one or more resource configurations (also referred to as "resourceSetting") for the terminal device. Each resource configuration includes one or more resource sets, and each resource set may include one or more resources. Each resource configuration/resource set/resource includes an index of its own. In addition, some other parameters are further included, for example, a resource periodicity and a signal type corresponding to the resource. The report configuration information is information related to reporting of a measurement result, and is configured through a report configuration (ReportConfig) in a protocol. The network device may configure one or more report configurations for the terminal device. Each report configuration includes reporting-related information such as a report indicator, report time, a report periodicity, and a report format. In addition, the report configuration further includes an index of the resource configuration, and the index indicates a measurement configuration based on which a reported result is obtained through measurement. For specific formats of the resource configuration and the report configuration, refer to a known protocol. Details are not described herein.

S2: The network device sends a downlink reference signal on a resource element corresponding to a resource configured based on the resource configuration information, so that the terminal device determines quality of each resource (or quality of a reference signal, or quality of a beam corresponding to the resource, or channel quality of each resource, channel quality corresponding to each resource, channel quality of a beam corresponding to each resource, channel quality of each beam, channel quality corresponding to each beam, and the like) by measuring the downlink reference signal.

S3: The terminal device measures the downlink reference signal based on the measurement configuration information.

S4: The terminal device sends a beam measurement report to the network device. The beam measurement report may include indexes of one or more resources, resource quality, and the like. Table 1 shows a report format used for beam measurement in the R15 protocol. A CSI-RS index (CSI-RS index, CRI) field and an SSB resource index (SSB resource index, SSBRI) field indicate to-be-reported resource indexes. A CRI or an SSBRI may be reported individually, or both may be reported. $\left\lceil \log_2\left(K_s^{\text{CSI-RS}}\right) \right\rceil$ and $\left\lceil \log_2\left(K_s^{\text{SSB}}\right) \right\rceil$ are lengths of the CRI field and the SSBRI field. RSRP represents resource quality. The RSRP is reported by using a differential report criterion. To be specific, an available resource, for example, RSRP of a best (optimal) resource (an RSRP field in Table 1) is reported through 7-bit quantization, and another RSRP (differential RSRP in Table 1) field is reported through 4-bit quantization.

Table 1

| Field (field) | Length (bit width) |
|---|---|
| CRI | $\left\lceil \log_2 \left( K_s^{\text{CSI-RS}} \right) \right\rceil$ |
| SSBRI | $\left\lceil \log_2 \left( K_s^{\text{SSB}} \right) \right\rceil$ |
| RSRP | 7 |
| Differential RSRP | 4 |

The information may be carried on a physical uplink control channel (physical uplink control channel) or a physical uplink shared channel (physical uplink shared channel).

(2) Uplink beam management

The uplink beam management mainly includes the following steps.

S1: A network device sends SRS configuration information to a terminal device. The network device may configure, for the terminal device, one or more SRS resource sets (SRS-ResourceSet) used for uplink beam management, where each SRS resource set includes one or more SRS resources (SRS-Resource). Each SRS resource is associated with one beam. Each SRS resource includes one SRS signal, and uplink beam measurement may be performed by measuring SRS signals corresponding to the SRS resources. For a specific format of a configuration of the SRS resource, refer to a known protocol. Details are not described herein.

S2: The terminal device sends, based on a configuration of each SRS resource, a corresponding SRS signal by using an uplink transmission beam associated with the SRS resource.

S3: The network device measures each SRS signal sent by the terminal device, to measure quality of each SRS resource.

It can be learned from a beam management process that a specific beam may be used for communication between the network device and the terminal device, and the specific beam to be used is determined through beam measurement. For example, the network device may send reference signals by using beams, and each beam corresponds to one reference signal. The terminal device determines a beam with good quality based on measurement of the reference signals, and sends information about a resource corresponding to one or more beams with good quality to the network device, so that the network device can determine a transmission beam to be used for downlink data transmission.

For example, FIG. 2 is a diagram of beam management according to an embodiment of this application.

FIG. 2 includes M resources, which are respectively a resource 1 to a resource M. Each transmission beam corresponds to one resource, and is used to send a reference signal corresponding to the resource. A network device respectively sends, by using M transmission beams, reference signals corresponding to the M resources. Sending of the reference signals is periodically performed. In each measurement periodicity, the network device respectively sends, by using the M transmission beams, the reference signals corresponding to the M resources, and a terminal device receives the reference signals by using a fixed reception beam, to measure quality of channels between the M transmission beams of the network device and the reception beam of the terminal device. In different measurement periodicities, the terminal device measures the M resources by using different reception beams, and measures quality of a channel between each transmission beam of the network device and each reception beam of the terminal device by using a plurality of measurement periodicities. After determining the quality of the channel between each transmission beam of the network device and each reception beam of the terminal device, the terminal device may determine N (where N is a positive integer, and a value of N is configured by using RRC signaling) available transmission beams of the network device, for example, N transmission beams with best quality of the network device, and an available reception beam corresponding to each of the N transmission beams. The terminal device needs to report, to the network device, indexes of resources corresponding to the N transmission beams, and store available reception beams corresponding to the N transmission beams. When the network device performs downlink data transmission by using any one of the N transmission beams (for example, a transmission beam with the best quality), the terminal device performs receiving by using an available reception beam corresponding to the transmission beam. The available beam may be a beam with optimal quality.

However, in the beam management shown in FIG. 2, the terminal needs to obtain the quality of the channel between each transmission beam of the network device and each reception beam of the terminal device by using the plurality of measurement periodicities, which is time-consuming. When an optimal transmission beam and a corresponding optimal reception beam change (for example, when the terminal device moves), it may take long time to identify a new optimal transmission beam and a corresponding reception beam, causing a data transmission performance loss.

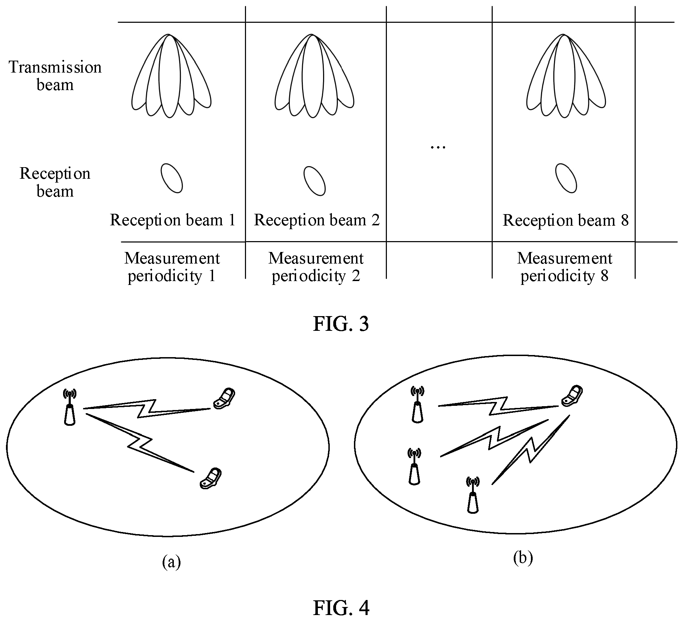

For example, FIG. 3 is another diagram of beam management according to an embodiment of this application.

In FIG. 3, a terminal device sequentially traverses all reception beams in an order of a reception beam 1, a reception beam 2, ..., and a reception beam 8, to measure a plurality of transmission beams. In other words, one fixed reception beam is used to measure a plurality of transmission beams in each measurement periodicity. For example, currently, in a measurement periodicity 2, the terminal device measures a plurality of transmission beams by using the reception beam 2. In this case, if an available transmission beam, for example, an optimal transmission beam, of a network device changes, that is, the optimal transmission beam becomes another transmission beam (a new optimal transmission beam), and an optimal reception beam corresponding to the new optimal transmission beam is the reception beam 1, the terminal device needs to perform measurement by using the reception beam 1 to find the new optimal transmission beam. However, in the foregoing reception beam traversal order, for the terminal device to perform beam measurement by using the reception beam 1 in a new measurement periodicity 1 so as to find a new optimal transmission beam, seven more measurement periodicities (a measurement periodicity 3, a measurement periodicity 4, ..., a measurement periodicity 8, and the new measurement periodicity 1) need to be performed. This causes a long delay (for example, if a value of the measurement periodicity is 20 milliseconds, a delay of hundreds of milliseconds is caused).

In other words, when an available transmission beam and a corresponding available reception beam change, for example, when an optimal transmission beam and a corresponding optimal reception beam change (for example, when the terminal device moves), it may take long time to identify a new optimal transmission beam and a corresponding reception beam, causing an excessively long delay.

To resolve the foregoing problem, this application provides a beam measurement and indication method. Channel quality of a beam is measured based on received information about at least one first resource, so that a beam measurement delay can be reduced. The at least one first resource may be an available resource, for example, a part of resources with good channel quality in the resources.

Before the methods provided in embodiments of this application are described, the following descriptions are first provided.

First, to clearly describe the technical solutions in embodiments of this application, terms such as "first" and "second" are used in embodiments of this application to distinguish between same items or similar items that provide basically same functions and purposes. For example, a first beam indication manner and a second beam indication manner are merely used for distinguishing between different beam indication manners, and do not limit a sequence of the first beam indication manner and the second beam indication manner. A person skilled in the art may understand that the terms such as "first" and "second" do not limit a quantity or an execution sequence, and the terms such as "first" and "second" do not indicate a definite difference.

Second, in embodiments of this specification, terms and English abbreviations, for example, a channel state information reference signal (CSI-RS), a sounding reference signal (SRS), a synchronization signal block (SSB), and a transmission configuration indicator (TCI), are all examples given for ease of description, and shall not constitute any limitation on this application. This application does not exclude a possibility of defining another term that can implement same or similar functions in an existing or future protocol.

Third, a "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Fourth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, and c may represent a, b, c, a and b, a and c, b and c, or a, b, and c, where a, b, and c may be single or plural.

Fifth, correspondences shown in tables in this application may be configured, or may be predefined. Values of information in the tables are merely examples, and other values may be configured. This is not limited in this application. When a correspondence between the information and parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. In implementations of the foregoing tables, another data structure, for example, an array, a queue, a container, a stack, a linear table, a pointer, a linked list, a tree, a graph, a structure, a class, a pile, or a hash table, may alternatively be used.

In addition, in this application, beam information may indicate a beam, slot information may indicate a slot, and periodicity information may indicate a periodicity.

For ease of understanding the beam measurement method provided in embodiments of this application, the following describes a system architecture of the beam measurement method provided in embodiments of this application. It may be understood that the system architecture described in embodiments of this application is intended to describe the technical solutions in embodiments of this application more clearly, and does not constitute a limitation on the technical solutions provided in embodiments of this application.

FIG. 4 is a diagram of a system architecture of a communication system according to an embodiment of this application.

As shown in (a) in FIG. 4, the communication system includes one or more network devices (for example, one network device shown in the figure) and one or more terminal devices (for example, two terminal devices shown in the figure). It can be learned that one network device may transmit data or control signaling to the one or more terminal devices.

As shown in (b) in FIG. 4, the communication system includes one or more network devices (for example, three network devices shown in the figure) and one or more terminal devices (for example, one terminal device shown in the figure). It can be learned that a plurality of network devices may transmit data or control signaling to the one terminal device.

In the communication systems shown in (a) and (b) in FIG. 4, the terminal devices may be mobile or fixed. The network device may be a micro base station, or may be a TRP or another type of network device. This is not limited in this embodiment of this application. The network device may provide communication coverage for a specific geographical area, and may be in radio link communication with a terminal device located in the coverage area (a cell).

Optionally, the communication system shown in the communication system may include more network devices, and coverage of each network device may include another quantity of terminal devices. This is not limited in this embodiment of this application.

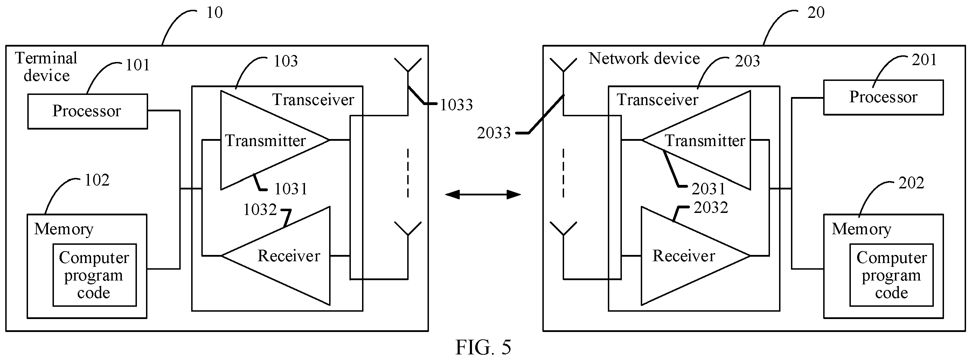

FIG. 5 is a diagram of communication performed by a communication apparatus according to an embodiment of this application.

As shown in FIG. 5, a terminal device 10 logically includes a plurality of parts, for example, includes a processor 101, a memory 102, and a transceiver 103. The transceiver 103 includes a transmitter 1031, a receiver 1032, and an antenna 1033. A network device 20 logically includes a plurality of parts, for example, includes a processor 201, a memory 202, and a transceiver 203. The transceiver 203 includes a transmitter 2031, a receiver 2032, and an antenna 2033. The receiver 1032 may be configured to receive, through the antenna 1033, information sent by the network device 20. The transmitter 1031 may be configured to send information to the network device 20 through the antenna 1033. The transmitter 2031 may be configured to send information to the terminal device 10 through the antenna 2033. The receiver 2032 may be configured to receive, through the antenna 2033, information sent by the terminal device 10.

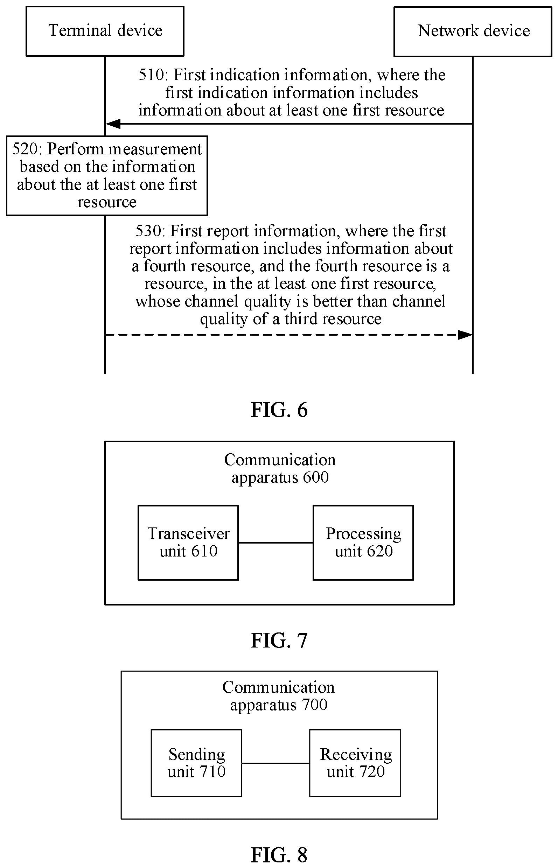

The following describes in detail the beam measurement method provided in this application with reference to FIG. 6.

FIG. 6 is a schematic flowchart of a beam measurement method according to an embodiment of this application. The method shown in FIG. 6 includes step 510 and step 520. The following describes each step in detail.

Step 510: A network device sends first indication information. The first indication information includes information about at least one first resource.

Correspondingly, a terminal device receives the first indication information.

The first indication information is used to configure a beam measurement related parameter. For example, the related parameter may include one or more of the following: one or more report configurations, one or more resource configurations, and one or more resource sets. Each report configuration may be associated with one or more resource configurations (resource configuration), each resource configuration may include one or more resource sets, and each resource set may include one or more resources.

To detect channel quality of a group of transmission beams, the network device needs to indicate a group of resources for the terminal device. A resource in the group of resources may be a resource that meets a channel quality requirement, an appropriate resource, or an available resource. For example, the resource in the group of resources may be a part of resources with good or optimal channel quality in the resources. For ease of differentiation, the resource in the group of resources is referred to as the first resource below. In other words, the first resource may be a good resource or an optimal resource in the resources.

The first indication information may include the information about the at least one first resource. Alternatively, the first indication information may include indication information indicating the information about the at least one first resource. Alternatively, the first indication information may indicate the information about the at least one first resource. Alternatively, the first indication information may be used to indicate the information about the at least one first resource. This is not limited in this embodiment of this application.

For obtaining the resource with good channel quality, refer to the foregoing steps of downlink beam management. For example, in step S4, the terminal device sends a beam measurement report to the network device, and the network device may obtain channel quality of each resource. Therefore, the network device may determine the part of resources with good channel quality. In this embodiment of this application, the part of resources with good channel quality in the resources are referred to as the first resource.

Step 520: The terminal device performs measurement based on the information about the at least one first resource.

The network device sends a reference signal to the terminal device based on a reference signal resource configured for the terminal device. Specifically, the network device may send, to the terminal device based on a group of first resources configured for the terminal device, a reference signal corresponding to the group of first resources.

In other words, before the measurement is performed based on the information about the at least one first resource, the reference signal sent by the network device may be first received. The reference signal may include one or more of a channel state information reference signal (channel state information reference signal, CSI-RS), a cell-specific reference signal (cell-specific reference signal, CS-RS), a UE-specific reference signal (user equipment-specific reference signal, US-RS), a demodulation reference signal (demodulation reference signal, DMRS), and a synchronization signal/-physical broadcast channel block (synchronization signal/physical broadcast channel block, SS/PBCH block). It may be understood that, when the measurement is performed based on the information about the at least one first resource, the reference signal sent by the network device may be measured based on the at least one first resource, and a result obtained by measuring the reference signal is channel quality corresponding to the first resource (that is, channel quality of the first resource), or channel quality corresponding to a beam (that is, channel quality of the beam). The beam is a beam corresponding to the first resource. In the foregoing technical solution, the at least one first resource may be a resource that meets the channel quality requirement or an appropriate resource. Therefore, it may be understood that beam measurement may also be referred to as reference signal measurement.

The terminal device may obtain, through measurement based on the information about the first resource, the channel quality of the beam corresponding to the first resource. It may be understood that the channel quality of the beam may be referred to as the channel quality corresponding to the beam, may be referred to as the channel quality of the first resource (corresponding to the beam), may be referred to as the channel quality corresponding to the first resource (corresponding to the beam), or the like. The foregoing descriptions represent a same concept, and details are not described below again.

The terminal device performs a first measurement report procedure by using the first resource. The first measurement report procedure may be a procedure in which the terminal device obtains, through measurement based on the information about the first resource, the channel quality of the beam corresponding to the first resource. The first measurement report procedure includes one or more of the following features:

The terminal device monitors, by measuring a group of resources (that is, the at least one first resource), a quality change of a beam corresponding to the group of resources, for example, a change of a quality relationship between beams.

For each first resource, the terminal device does not perform reception beam traversal, but keeps using a reception beam indicated by the network device for the resource.

In other words, the network device may obtain, based on a downlink beam management procedure, an available reception beam corresponding to each transmission beam, for example, an optimal reception beam. A reception beam indicated by the network device for each resource may be an optimal reception beam corresponding to the resource. In this embodiment of this application, for a transmission beam corresponding to each first resource, the terminal device may perform receiving by using a corresponding optimal reception beam.

Reporting of a measurement result is performed based on a condition, that is, the reporting is performed only when a specific condition is met.

For the reporting of the measurement result and the specific condition that needs to be met when the measurement result is reported, refer to descriptions of step 530.

The first indication information may perform indication in any one of the following three manners: Manner 1, Manner 2, or Manner 3.

Manner 1: The first indication information may be RRC signaling. Alternatively, the first indication information may be carried in RRC signaling, or the first indication information may be sent by using the RRC signaling. The RRC signaling may be sent by an O-CU-CP.

In other words, the RRC signaling sent by the network device to the terminal device may include the information about the at least one first resource.

For example, the network device configures the information about the at least one first resource for the terminal device by using the RRC signaling, and a resource included in the resource set is the at least one first resource. The RRC signaling further needs to indicate specific information of each first resource, for example, beam information, time-frequency resource mapping information, power information, scrambling index information, periodicity information, and slot information. The information about the at least one first resource may be included in the resource set. The resource set may be a resource configuration (resourceSetting), a resource set (resourceSet), or a subset of resourceSet.

In an example, if the information about the first resource configured by the network device for the terminal device by using the RRC signaling includes information about a resource a, information about a resource b, and information about a resource c, and a resource set A includes the resource a, the resource b, and the resource c, the RRC signaling may include or indicate an index of the resource a, an index of the resource b, and an index of the resource c, or the RRC signaling may include or indicate an index of the resource set A.

Manner 2: The first indication information may be RRC signaling and MAC-CE signaling. Alternatively, the first indication information may be carried in RRC signaling and MAC-CE signaling, or the first indication information may be sent by using the RRC signaling and the MAC-CE signaling. The MAC-CE signaling may be sent by an O-DU.

In other words, the MAC-CE signaling and the RRC signaling that are sent by the network device to the terminal device may include the information about the at least one first resource.

For example, the network device configures a resource set for the terminal device by using the RRC signaling, and the resource set includes at least one resource. The RRC signaling further needs to indicate a specific parameter of each resource, for example, beam information, time-frequency resource mapping information, power information, scrambling index information, periodicity information, and slot information. The resource set may be a resource configuration (resource-Setting), a resource set (resourceSet), or a subset of resourceSet. The network device indicates, by using the MAC-CE signaling and from the resource set configured by using the RRC signaling, the at least one resource as the at least one first resource. The MAC-CE may include or may indicate one or more of the following: an index of the at least one first resource and an index of the resource set to which the at least one first resource belongs. The resource index may be a global resource index, that is, an index of a resource in all configured resources. Alternatively, the resource index may be a local resource index, that is, an index of a resource in a resource set to which the resource belongs (corresponding to the resource). This is not limited in this embodiment of this application. For example, the MAC-CE may indicate a group of resource indexes, and each resource index is used to determine one first resource.

In an example, the first resource includes a resource a, a resource b, and a resource c, and a resource set configured by the network device for the terminal by using the RRC signaling is a resource set A {resource set B {resource a, resource b, resource c}, resource set C {resource d, resource e, resource f} }. In this case, the network device indicates an index of the resource set B by using the MAC-CE signaling, to indicate that the at least one first resource belongs to the resource set B. Alternatively, the network device indicates an index of the resource a, an index of the resource b, and an index of the resource c by using the MAC-CE signaling.

In another example, the first resource includes a resource a and a resource b, and a resource set configured by the network device for the terminal by using the RRC signaling is a resource set A {resource set B{resource a, resource b, resource c}, resource set C {resource d, resource e, resource f} }. In this case, the network device indicates an index of the resource set B by using the MAC-CE signaling, to indicate that the at least one first resource belongs to the resource set B. Alternatively, the network device indicates an index of the resource a and an index of the resource b by using the MAC-CE signaling. It can be learned that a resource that is not the first resource may exist in the resource set B.

In still another example, the first resource includes a resource a, a resource b, a resource c, and a resource d, and a resource set configured by the network device for the terminal by using the RRC signaling is a resource set A {resource set B {resource a, resource b, resource c}, resource set C {resource d, resource e, resource f} }. In this case, the network device indicates an index of the resource set A (or an index of the resource set B and an index of the resource set C) by using the MAC-CE signaling, to indicate that the at least one first resource belongs to the resource set A (or the resource set B and the resource set C). Alternatively, the network device indicates an index of the resource a, an index of the resource b, an index of the resource c, and an index of the resource d by using the MAC-CE signaling. It can be learned that the at least one first resource may not belong to a same resource set. The MAC-CE signaling may include or indicate indexes of a plurality of resource sets.

Manner 3: The first indication information may be MAC-CE signaling. Alternatively, the first indication information may be carried in MAC-CE signaling. Alternatively, the first indication information may be sent by using MAC-CE signaling.

In other words, the MAC-CE signaling sent by the network device to the terminal device may include the information about the at least one first resource.

For example, the information about the at least one first resource included in or indicated by the MAC-CE signaling may include one or more of the following: an index of a resource set to which the at least one first resource belongs and a quantity of the at least one first resource.

The index of the resource set to which the at least one first resource belongs indicates the resource set to which the at least one first resource belongs and that is indicated by the MAC-CE signaling. The quantity of the at least one first resource indicates the quantity of the at least one first resource indicated by the MAC-CE signaling.

The resource set to which the first resource belongs may be first configured by using RRC signaling. When the resource set is configured by using the RRC signaling, the first resource may not be configured for the resource set by using the RRC signaling. In other words, in an RRC configuration, a configuration of the resource set does not include the first resource, and a specific first resource is subsequently indicated for the resource set by using the first indication information. Alternatively, the first resource may be configured for the resource set by using the RRC signaling, and the first resource in the resource set is subsequently updated by using the first indication information.

If the first resource is configured by using the RRC signaling, the quantity of the at least one first resource indicated in the MAC-CE may be determined based on a quantity of first resources configured by using the RRC (where the two quantities are equal). In this case, the quantity of the at least one first resource may not be indicated in the MAC-CE.

In an example, a resource set A is configured by using RRC signaling, but the resource set A is an empty set. In other words, the resource set A does not include a resource. A resource a, a resource b, and a resource c are configured for the resource set A by using MAC-CE signaling. In other words, the resource a, the resource b, and the resource c are first resources. Further, information about the first resource in the resource set A may be updated by using the MAC-CE signaling.

In another example, before the terminal device receives the first indication information, a step of receiving information about a resource in a resource set configured by using RRC signaling may be further included. The resource in the resource set configured by using the RRC signaling may include the at least one first resource, that is, the resource set is configured by using the RRC signaling, and the at least one first resource is configured for the resource set by using the RRC signaling. In this case, the information about the at least one first resource may be updated by using MAC-CE signaling. In other words, the information about the at least one first resource included in the first indication information is used to update the information about the resource in the resource set configured by using the RRC signaling. Further, to determine, by using the MAC-CE signaling, a resource set that needs to be updated, the first indication information may include information about the resource set, for example, one or more of an index of the resource set, an index of a first resource in the resource set, and information about the first resource in the resource set. In other words, the information about the resource set is included in the first indication information. In this case, because the at least one first resource has been configured by using the RRC signaling, a quantity of first resources included in the first indication information may be determined based on a quantity of first resources configured in the RRC signaling, so that the first indication information may not include a quantity of the at least one first resource. Alternatively, the first indication information is used to indicate the information about the resource set. Alternatively, the first indication information includes information used to indicate the resource set. Alternatively, the first indication information indicates the information about the resource set. Alternatively, the first indication information includes information indicating the resource set. This is not limited in this embodiment of this application.

For example, the resource set configured by using the RRC signaling is a resource set A{resource a, resource b, resource c}. In other words, the resource a, the resource b, and the resource c are first resources. In this case, the first indication information may include an index of the resource set A (or an index of the resource a, an index of the resource b, and an index of the resource c), information about the resource a, information about the resource b, and information about the resource c, to update the information about the resource a, the information about the resource b, and the information about the resource c.

In a possible implementation, for the at least one first resource included in the first indication information, the first indication information may include specific information of the at least one first resource. Alternatively, the first indication information may include specific information indicating the at least one first resource. Alternatively, the first indication information may indicate specific information of the at least one first resource. Alternatively, the first indication information may be used to indicate specific information of the at least one first resource. This is not limited in this embodiment of this application. For example, the specific information of the at least one first resource may be one or more of a resource index of the at least one first resource, beam information of the at least one first resource, time-frequency resource mapping information of the at least one first resource, power information of the at least one first resource, scrambling index information of the at least one first resource, periodicity information of the at least one first resource, power information of the at least one first resource, resource configuration information corresponding to the at least one first resource, report configuration information corresponding to the at least one first resource, scrambling index information corresponding to the at least one first resource, and slot information corresponding to the at least one first resource.

The resource index indicates an index of the first resource. The resource index may be a global index, that is, an index of a first resource in all configured resources. Alternatively, the resource index may be a local index, that is, a local index of a first resource in a resource set in which the first resource is located.

The beam information indicates a beam used for the at least one first resource. For example, the beam information may be a TCI-state.

The time-frequency resource mapping information indicates a time-frequency resource occupied when a reference signal corresponding to the at least one resource is sent.

The power information is used to determine a transmit power of the reference signal corresponding to the at least one first resource.

The scrambling index information indicates a scrambling index used for the at least one first resource.

The periodicity information is used to determine a sending periodicity of the at least one first resource.

The slot information is used to determine a sending slot of the at least one first resource.

The resource configuration information indicates a resource configuration to which the at least one first resource belongs.

The report configuration information indicates a report configuration associated with the at least one first resource.

In a possible implementation, the first indication information may include beam information, time-frequency resource mapping information, power information, periodicity information, slot information, and the like of each first resource.

In a possible implementation, information about first resources may be different. For example, the resource a, the resource b, and the resource c are the first resources, and the information used for the resource a, the resource b, and the resource c includes beam information, time-frequency resource mapping information, power information, periodicity information, and slot information. The beam information used for the resource a, the beam information used for the resource b, and the beam information used for the resource c may be different. Similarly, the time-frequency resource mapping information, the power information, the periodicity information, and the slot information used for the resource a, the resource b, and the resource c may be different. The information about the first resources may be separately indicated in the first indication information.

In a possible implementation, types of information used for the resource a, the resource b, and the resource c may also not be completely the same.

For example, the resource a, the resource b, and the resource c are the first resources. The information used for the resource a includes beam information and time-frequency resource mapping information. The information used for the resource b includes beam information, periodicity information, and slot information. The information used for the resource c includes beam information, power information, and periodicity information. The information about the first resources may be separately indicated in the first indication information.

In a possible implementation, same first information is used for the at least one first resource, and the first information includes at least one of the following: beam information, time-frequency resource mapping information, power information, scrambling index information, periodicity information, and slot information.

The at least one first resource may share some information, such as beam information, power information, scrambling index information, periodicity information, and slot information. In this way, only one piece of information needs to be indicated for the group of first resources by using the MAC-CE, so that MAC-CE overheads can be reduced. In other words, a same piece of first information is used for the at least one first resource.

For example, the MAC-CE indicates one piece of power information, and the power information is used for the foregoing group of first resources. For another example, the MAC-CE indicates one piece of periodicity information, and the periodicity information is used for the foregoing group of first resources. For another example, the MAC-CE indicates one piece of scrambling index information, and the scrambling index is used for the foregoing group of first resources. In other words, when the first information used for the at least one first resource is the same, the first indication information may not repeatedly include the first information. Instead, the at least one first resource shares the first information.

In an example, the first resource includes a resource a, a resource b, and a resource c, and the first information includes beam information, time-frequency resource mapping information, power information, scrambling index information, periodicity information, and slot information. In other words, the same beam information, the same time-frequency resource mapping information, the same power information, the same scrambling index information, the same periodicity information, and the same slot information are used for the at least one first resource. In this case, the first indication information may include only one piece of beam information, one piece of time-frequency resource mapping information, one piece of power information, one piece of scrambling index information, one piece of periodicity information, and one piece of slot information. It may be learned that beam information, time-frequency resource mapping information, power information, scrambling index information, periodicity information, and slot information used for the resource a, the resource b, and the resource c are the same.

In another example, the first resource includes a resource a, a resource b, and a resource c, and the first information includes beam information, time-frequency resource mapping information, power information, scrambling index information, and periodicity information. In other words, the same beam information, the same time-frequency resource mapping information, the same power information, the same scrambling index information, and the same periodicity information are used for the at least one first resource. In this case, the first indication information may include only one piece of beam information, one piece of time-frequency resource mapping information, one piece of power information, one piece of scrambling index information, and one piece of periodicity information. It may be learned that beam information, time-frequency resource mapping information, power information, scrambling index information, and periodicity information used for the resource a, the resource b, and the resource c are the same. In addition, the information about the first resource included in the first indication information may further include slot information. Different slot information may be used for different first resources, and may be separately included in the first indication information.

In a possible implementation, the first resource may share a part of information of another resource, so that this part of information does not need to be indicated, thereby reducing MAC-CE overheads. In other words, the first indication information may not include this part of information. Specifically, an association relationship between one first resource and another resource may be established. For ease of description, the resource associated with the first resource is referred to as a second resource. A part of information about the second resource associated with each first resource may be used for the first resource, so that the MAC-CE no longer needs to indicate the information.

In a possible implementation, the first indication information includes information about at least one second resource, and the at least one first resource is associated with the at least one second resource in a one-to-one manner; and the information about the at least one second resource includes an index of a resource set corresponding to the at least one second resource and/or an index of the at least one second resource. After receiving the first indication information, the terminal device may determine the at least one second resource based on the index of the set of the at least one second resource and/or the index of the at least one second resource included in the first indication information, to obtain the information about the at least one second resource.

It may be understood that because the information about the second resource may be obtained, second information of the second resource included in the information about the second resource may also be obtained. In a possible implementation, second information of a second resource associated with each first resource is used for the first resource. The second information includes one or more of the following: beam information, time-frequency resource mapping information, power information, scrambling index information, periodicity information, and slot information. The second information of the second resource associated with each first resource is used for the first resource, that is, the second information of the second resource associated with each first resource is used as the second information of the first resource, that is, the second information of the first resource is the same as the second information of the second resource associated with the first resource. For example, the beam information of the second resource may be used for the first resource. For example, the time-frequency resource mapping information of the second resource may be used for the first resource. For example, the power information of the second resource may be used for the first resource. For example, the scrambling index information of the second resource may be used for the first resource. For example, the periodicity information of the second resource may be used for the first resource. The slot information of the second resource may be used for the first resource.

For one first resource, the MAC-CE needs to indicate information about a second resource associated with the first resource, so that the terminal device knows which second resource is associated with the first resource. For example, in a possible implementation, the first indication information (for example, the MAC-CE signaling) includes the information about the at least one second resource. The at least one first resource is associated with the at least one second resource in a one-to-one manner. The information about the at least one second resource includes the index of the resource set corresponding to the at least one second resource and/or the index (resource index) of the at least one second resource. Alternatively, the first indication information may include information indicating the at least one second resource. Alternatively, the first indication information may include indication information used to indicate the information about the at least one second resource. Alternatively, the first indication information may indicate the information about the at least one second resource. Alternatively, the first indication information may be used to indicate the information about the at least one second resource. This is not limited in this embodiment of this application.

The index of the second resource may be a global index of the second resource in all configured resources. Alternatively, the index of the second resource may be a local index of the second resource in a resource set in which the second resource is located. The first indication information may indicate indexes of a plurality of second resources, and a first resource corresponding to each second resource is determined based on an order of the plurality of second resources in the first indication information. For example, a 1st second resource is associated with a 1st first resource in the foregoing group of first resources, a 2nd second resource is associated with a 2nd first resource in the foregoing group of first resources, and so on.

In an example, the first indication information may include information about M first resources and information about M second resources, and the M first resources are associated with the M second resources in a one-to-one manner. For example, a first resource w is associated with a second resource W, and a first resource u is associated with a second resource U. The association between the first resource and the second resource may be implemented by associating the index of the first resource (or the index of the resource set in which the first resource is located) with the index of the second resource (or the index of the resource set in which the second resource is located). In this example, information used for each first resource is second information of a second resource associated with the first resource. In other words, second information of the second resource W is used for the first resource w. Second information of the second resource U is used for the first resource u.

In another example, the first indication information may include information about M first resources and information about N second resources. One or more of the M first resources are associated with one second resource. For example, a first resource w is associated with a second resource W, and a first resource u is also associated with the second resource W. A first resource x is associated with a second resource X. In this example, information used for each first resource is second information of a second resource associated with the first resource. Same second information is used for a plurality of first resources associated with a same second resource. In other words, second information of the second resource W is used for both the first resource w and the first resource u. Second information of the second resource X is used for the first resource x.

In still another example, the first indication information may include information about M first resources and information about one second resource. The M first resources are all associated with the second resource. For example, the first resource includes a resource a, a resource b, and a resource c, and the second resource includes a resource A. In this case, the resource a is associated with the resource A. The resource b is associated with the resource A. The resource c is associated with the resource A. In this example, second information of the second resource associated with the M first resources is used for all the M first resources. In other words, second information of the resource A is used for all the resource a, the resource b, and the resource c.

In a possible implementation, information that is not included in the second information may be included in the first indication information. For example, the second information includes beam information and time-frequency resource mapping information. In this case, the first indication information may include the index of the second resource or the index of the resource set in which the second resource is located, but does not include the beam information or the video resource mapping information. The first indication information may further include one or more of power information, scrambling index information, periodicity information, and slot information of the first resource. In other words, the beam information and the time-frequency resource mapping information of the first resource are obtained by using the beam information and the time-frequency resource mapping information of the second resource associated with the first resource. However, one or more of the power information, the scrambling index information, the periodicity information, and the slot information of the first resource are obtained not by using one or more of the power information, the scrambling index information, the periodicity information, and the slot information of the second resource.

In a possible implementation, a part of first resources may be associated with the second resource. Information about the part of first resources associated with the second resource may be obtained by using the second resource. Information about a first resource that is not associated with the second resource may be included in the first indication information.

In a possible implementation, second information of each first resource is determined based on second information of a second resource associated with the first resource.

For example, power information of each first resource may be determined based on power information of a second resource associated with the first resource. Scrambling index information of each first resource may be determined based on scrambling index information of a second resource associated with the first resource. Periodicity information of each first resource may be determined based on periodicity information of a second resource associated with the first resource. Beam information of each first resource may be determined based on beam information of a second resource associated with the first resource. Time-frequency resource mapping information of each first resource may be determined based on time-frequency resource mapping information of a second resource associated with the first resource. Slot information of each first resource may be determined based on slot information of a second resource associated with the first resource. The following uses an example in which the second information of the first resource includes the slot information of the first resource. It may be understood that the following descriptions applied to the slot information of the first resource are also applicable to other second information of the first resource, and shall not constitute any limitation on this application.

In other words, the slot information of the at least one first resource may not be directly obtained by using the slot information of the second resource associated with the at least one first resource, but may be obtained by using the slot information of the second resource associated with the at least one first resource and other information. The other information may be included in the first indication information.

For one first resource, slot information of the first resource may be determined by using a second resource associated with the first resource and slot offset information (for example, a slot offset) indicated by the first indication information.

In a possible implementation, the first indication information further includes a second information offset, and second information of each first resource is determined based on second information of a second resource associated with the first resource and the second information offset. Alternatively, the first indication information indicates the second information offset. Alternatively, the first indication information may be used to indicate the second information offset. The first indication information may indicate a common second information offset, and the second information offset is used for all first resources. Alternatively, the first indication information indicates one second information offset for each first resource, and a corresponding second information offset is used for each first resource. The second information offset may be a beam offset, a time-frequency resource offset, a power offset, a scrambling index offset, a periodicity offset, a slot offset, or the like. This is not limited in this embodiment of this application. In a possible implementation, the second information offset may alternatively be reported by the terminal device, or may be preset in a protocol (specified in a protocol), or may be configured by the network device. This is not limited in this embodiment of this application.

For example, the first indication information includes the power offset, and power information of each first resource is determined based on power information of a second resource associated with the first resource and the power offset. For example, the first indication information includes the scrambling index offset, and scrambling index information of each first resource is determined based on scrambling index information of a second resource associated with the first resource and the scrambling index offset. For example, the first indication information includes the periodicity offset, and periodicity information of each first resource is determined based on periodicity information of a second resource associated with the first resource and the periodicity offset. For example, the first indication information includes the beam offset, and beam information of each first resource is determined based on beam information of a second resource associated with the first resource and the beam offset. For example, the first indication information includes the time-frequency resource offset, and time-frequency resource mapping information of each first resource is determined based on time-frequency resource mapping information of a second resource associated with the first resource and the time-frequency resource offset. For example, the first indication information includes the slot offset, and slot information of each first resource is determined based on slot information of a second resource associated with the first resource and the slot offset. The following uses an example in which the second information includes the slot information of the first resource, the second information includes the slot information of the second resource, and the second information offset includes the slot offset. It may be understood that the following descriptions applied to the slot information of the first resource are also applicable to other second information of the first resource, and shall not constitute any limitation on this application.

For example, for each first resource, the first indication information indicates one slot offset. Slot information of each first resource may be a sum of slot information of a second resource associated with the first resource and a corresponding slot offset. Alternatively, slot information of a first resource may be a difference between slot information of a second resource associated with the first resource and a corresponding slot offset. Slot offsets corresponding to a plurality of first resources may be the same or may be different. This may be determined depending on whether the first indication information includes one or more slot offsets. For example, when the first indication information includes one slot offset, it indicates that the slot offsets corresponding to the plurality of first resources are the same. In other words, the slot offsets involved when slot information of the plurality of first resources is obtained are a same slot offset. When the first indication information includes a plurality of slot offsets, it indicates that the slot offsets corresponding to the plurality of first resources are not completely the same. In other words, the slot offsets involved when slot information of the plurality of first resources is obtained may not be a same slot offset. For example, for each first resource, the first indication information may include a corresponding slot offset. Slot offsets of first resources are arranged in the first indication information in an order of the at least one first resource in the first indication information. To be specific, slot offset information corresponding to a $1^{st}$ first resource ranks first, slot offset information corresponding to a $2^{nd}$ first resource ranks second, and so on.

After a measurement report configuration (the first indication information) is configured for the terminal device, the terminal device needs to determine that the measurement report configuration is used in the foregoing first measurement report procedure. In this case, the terminal device performs reporting in a measurement manner and a report manner of the first measurement report procedure.

Specifically, the first measurement report procedure may be indicated in the following Manner 1, Manner 2, or Manner 3.

Manner 1: A parameter is used to display the configuration. The parameter may be configured in the report configuration, to indicate that a measurement report procedure corresponding to the report configuration is the first measurement report procedure. For example, if a report condition is configured in the report configuration, the foregoing first measurement report procedure is used. The parameter may be configured in a resource configuration or a resource set, to indicate that a measurement report procedure corresponding to the resource configuration or the resource set is the first measurement report procedure. For example, a parameter is configured in the resource set, to indicate that the terminal device keeps using a reception beam configured by the network device for each resource. It may be understood that the report configuration, the resource configuration, or the resource set may be included in the first indication information.

Manner 2: A dedicated report configuration, resource configuration, or resource set is configured to perform the first measurement report procedure. Provided that the terminal device is configured with the dedicated report configuration, resource configuration, or resource set, the terminal device may determine to perform the first measurement report procedure based on the dedicated report configuration, resource configuration, or resource set. It may be understood that the configured dedicated report configuration, resource configuration, or resource set may be included in the first indication information.

Manner 3: The terminal device receives the first indication information including the at least one first resource, and the terminal device may determine that the at least one first resource included in the first indication information is used in the first measurement report procedure.

Optionally, after step 520, step 530 may be further included.

Step 530: The terminal device sends first report information to the network device when a first condition is met. The first report information includes information about a fourth resource, and the fourth resource is a resource, in the at least one first resource, whose channel quality is better than channel quality corresponding to a third resource, and/or, the first report information includes the information about the at least one first resource.

Correspondingly, the network device receives the first report information.

It may be understood that the terminal device measures the foregoing group of first resources, so that when an available beam, for example, an optimal beam, changes, the terminal device finds the change in a timely manner, and reports the change to the network device. To determine the change of the optimal beam, the terminal device needs to know a specific current optimal beam. In this application, a first resource corresponding to a current optimal beam is referred to as the third resource. The third resource may also be considered as a resource for reference. The terminal device may compare the channel quality of the third resource with channel quality of another first resource, to determine whether the optimal beam changes.

In other words, the third resource is a resource corresponding to the available beam in the first resource sent by the network device to the terminal device, for example, a resource corresponding to a beam with optimal channel quality. A transmission beam and a reception beam corresponding to the third resource may be used for data transmission. In other words, the third resource is a beam with optimal channel quality before the terminal device measures, in step 520, channel quality of a beam corresponding to each first resource. It may be learned that the channel quality of the beam may change. A fourth beam is a resource, in the first resource, whose channel quality is better than the channel quality of the third resource after the terminal device measures, in step 520, the channel quality of the beam corresponding to each first resource.

In a possible implementation, information about the third resource may be configured by using the RRC signaling or the MAC-CE signaling, or the information about the third resource is included in the first indication information, or the third resource is an $n^{th}$ first resource in the at least one first resource, where n is a positive integer. A value of n may be configured by the network device, or may be reported by the terminal device, or may be specified in a protocol, for example, n=1. This is not limited in this application. The information about the third resource may include an index of the third resource. The information about the third resource is included in the first indication information. In other words, the first indication information includes the information about the third resource, or the first indication information indicates the information about the third resource. This is not limited in this embodiment of this application.

In other words, the information about the third resource may be configured by using the RRC signaling or the MAC-CE signaling.

Alternatively, the information about the third resource is included in the first indication information. For example, the index of the third resource is indicated in the first indication information to the terminal device. Therefore, the terminal device may determine the third resource based on the index of the third resource.

Alternatively, the third resource is the $n^{th}$ first resource in the at least one first resource. After receiving the first indication information, the terminal device may obtain the at least one first resource. Therefore, the terminal device may determine, based on the obtained at least one first resource and the value of n, that the third resource is the $n^{th}$ first resource in the at least one first resource. For example, if n is 1, a $1^{st}$ first resource in the at least one first resource included in the first indication information is the third resource. After receiving the at least one first resource, the terminal device may determine that the third resource is the $1^{st}$ first resource in the at least one first resource. It may be understood that the value of n being 1 is an example, and shall not constitute any limitation on this embodiment of this application.

The first condition may include one or more of the following conditions.

Condition 1: The channel quality corresponding to the third resource is lower than a first threshold. A value of the first threshold may be configured by the network device, or may be reported by the terminal device, or may be specified in a protocol. This is not limited in this application.

Condition 2: A channel quality decrement corresponding to the third resource exceeds a second threshold. A value of the second threshold may be configured by the network device, or may be reported by the terminal device, or may be specified in a protocol. This is not limited in this application.

Condition 3: Channel quality corresponding to at least k first resources is better than the channel quality corresponding to the third resource, where k is a positive integer. A value of k may be configured by the network device, or may be reported by the terminal device, or may be specified in a protocol, for example, k=1. This is not limited in this application.

To distinguish between channel quality of each first resource before and after measurement, channel quality of a beam corresponding to each first resource before the channel quality (of the beam) corresponding to the first resource is measured in step 520 may be referred to as original channel quality, or original channel quality (of the beam) corresponding to the first resource. Channel quality (of the beam) corresponding to each first resource after measurement in step 520 is referred to as current channel quality, or current channel quality (of the beam) corresponding to the first resource, or new channel quality, or new channel quality of the beam corresponding to the first resource.

The condition 1 may be understood as that current channel quality corresponding to the third resource is lower than the first threshold. Alternatively, the current channel quality corresponding to the third resource is lower than or equal to the first threshold. Alternatively, the current channel quality corresponding to the third resource is less than or equal to the first threshold. The value of the first threshold may be configured by the network device, or may be reported by the terminal device, or may be specified in a protocol. This is not limited in this application.

The condition 2 may be understood as that a decrement of the current channel quality corresponding to the third resource compared with original channel quality corresponding to the third resource exceeds the second threshold. Alternatively, the decrement of the current channel quality corresponding to the third resource compared with the original channel quality corresponding to the third resource is greater than or equal to the second threshold.

The condition 3 may be understood as that current channel quality of the at least k first resources is better than the original channel quality of the third resource. Alternatively, the current channel quality of the at least k first resources is better than or equal to the original channel quality of the third resource. Alternatively, the current channel quality of the at least k first resources is better than the current channel quality of the third resource. Alternatively, the current channel quality of the at least k first resources is better than or equal to the current channel quality of the third resource.

When one or more of the foregoing three conditions are met, the terminal device may send the first report information to the network device, so that the network device updates, in a timely manner based on the received first report information, information corresponding to each resource, for example, channel quality and beam information corresponding to the at least one first resource.

Alternatively, a condition 4 may be further included, where an order of the channel quality of the at least one first resource changes.

For example, it is assumed that the first resource includes a resource a, a resource b, and a resource c. An order of original channel quality of the first resources is that original channel quality of the resource a is better than original channel quality of the resource b, and the original channel quality of the resource b is better than original channel quality of the resource c. If an order of current channel quality of the first resources is that current channel quality of the resource b is better than current channel quality of the resource c, and the current channel quality of the resource c is better than current channel quality of the resource a, it indicates that the order of the channel quality of the at least one first resource changes.

In a possible implementation, the first report information sent by the terminal device to the network device may include the information about the at least one first resource.

For example, the first report information includes information about p first resources. A value of p may be configured by the network device, or may be reported by the terminal device, or may be specified in a protocol. The value of p may be equal to or less than the quantity of first resources in the first indication information sent by the network device to the terminal device. For example, when the value of p is 1, the first report information includes information about one first resource. When the value of p is the quantity of first resources in the first indication information, the first report information includes information about all first resources. The information about the first resource includes one or more of the following: indexes of the p first resources, an index of a resource set to which the p first resources belong, and channel state information of the p first resources. The indexes of the p first resources may be a relative index of the at least one first resource included in the first indication information. The channel state information may include one or more of the following: RSRP, RSRQ, an SINR, a channel quality indicator (channel quality indicator, CQI), a PMI, and an RI.

In a possible implementation, the first report information may include the channel state information of the p first resources. For example, when the value of p is the quantity of first resources in the first indication information, the first report information includes channel state information of all the first resources. In this case, the indexes of the first resources may not be included. Therefore, in a format of the first report information, the channel state information of the p first resources may be indicated in the order of the at least one first resource in the first indication information. The order of the at least one first resource may be an order of the at least one first resource in the first indication information.

In a possible implementation, the first report information may include the indexes of the p first resources. In this case, the channel state information of the first resources may not be included. Therefore, in a format of the first report information, the p first resources may be arranged in an order of values of channel quality of the p first resources. For example, the channel quality is arranged in descending order, or the channel quality is arranged in ascending order, so that the network device determines a quality relationship between the channel quality of the p first resources.

In a possible implementation, when the first resource includes at least one fourth resource, the first report information may include at least one of the following: an index of the fourth resource, channel state information of the fourth resource, channel state information of the third resource, and an index of the third resource. Alternatively, the first report information indicates at least one of the following: the index of the fourth resource, the channel state information of the fourth resource, the channel state information of the third resource, and the index of the third resource.

It may be understood that the channel state information of the fourth resource included in the first report information is current channel state information of the fourth resource, and the included channel state information of the third resource is current channel state information of the third resource.

In an example, the format of the first report information may be an index of one third resource plus indexes of Q fourth resources plus channel state information of the one third resource plus channel state information of the Q fourth resources. A value of Q may be configured by the network device, or may be reported by the terminal device, or may be specified in a protocol. For example, it is specified that the value of Q is 1, that is, the first report information includes an index and channel state information of one fourth resource.

In this example, the channel state information of the one third resource and the channel state information of the Q fourth resources may be reported in a differential report manner. For example, when RSRP of the one third resource and RSRP of the Q fourth resources are reported, S bits may be used to quantize the RSRP of the one third resource. For each fourth resource, T (T<S) bits are used to quantize a difference between RSRP of the fourth resource and the RSRP of the third resource, that is, the RSRP of the fourth resource minus the RSRP of the third resource. The terminal device may determine RSRP of each fourth resource based on the difference and the RSRP of the third resource. For another example, when RSRP of the one third resource and RSRP of the Q fourth resources are reported, S bits may be used to quantize RSRP of one fourth resource (for example, a fourth resource whose RSRP is the largest). For any other fourth resource or the one third resource, T (T<S) bits are used to quantize a difference between the RSRP of the one fourth resource and RSRP of the any other fourth resource or the RSRP of the one third resource. The terminal device may determine the RSRP of the any other fourth resource and the RSRP of the one third resource based on the difference and the RSRP of the one fourth resource.

If the value of Q is 1, when the terminal device reports RSRP of one third resource and RSRP of one fourth resource, S bits may be used to quantize the RSRP of the one third resource. For the one fourth resource, T (T<S) bits are used to quantize a difference between the RSRP of the one fourth resource and the RSRP of the one third resource, that is, the RSRP of the fourth resource minus the RSRP of the third resource. The terminal device may determine the RSRP of the one fourth resource based on the difference and the RSRP of the one third resource. Alternatively, if the value of Q is 1, when the terminal device reports RSRP of one third resource and RSRP of one fourth resource, S bits may be used to quantize the RSRP of the one fourth resource. For the one third resource, T (T<S) bits are used to quantize a difference between the RSRP of the one fourth resource and the RSRP of the one third resource, that is, the RSRP of the fourth resource minus the RSRP of the third resource. The terminal device may determine the RSRP of the one third resource based on the difference and the RSRP of the one fourth resource.

In another example, the format of the first report information may be indexes of Q fourth resources plus channel state information of one third resource plus channel state information of the Q fourth resources. The channel state information of the one third resource and the channel state information of the Q fourth resources may be reported in a differential report manner. For the differential report manner, refer to the foregoing descriptions. Details are not described herein again.

In still another example, the format of the first report information may be indexes of Q fourth resources plus channel state information of the Q fourth resources.

In this example, the channel state information of the Q fourth resources may be reported in a differential report manner. For example, when Q is greater than 1, S bits may be used to quantize RSRP of one fourth resource (for example, a fourth resource whose RSRP is the largest). For any other fourth resource, T (T<S) bits are used to quantize a difference between the RSRP of the one fourth resource and RSRP of the any other fourth resource or the RSRP of the one third resource. The terminal device may determine the RSRP of the any other fourth resource based on the difference and the RSRP of the one fourth resource.

In still another example, the format of the first report information may be indexes of Q fourth resources.

In the foregoing examples, the RSRP may alternatively be replaced with the RSRQ, the SINR, the CQI, or the like. In other words, the channel state information may alternatively be the RSRQ, the SINR, the CQI, or the like. This is not limited in this embodiment of this application.

If a quantity of fourth resources is less than Q, the terminal device may not send the first report information to the network device. Alternatively, the format of the first report information sent by the terminal device may be an index of one third resource plus indexes of Q first resources plus channel state information of the one third resource plus channel state information of the Q first resources. Alternatively, the format of the first report information sent by the terminal device may be indexes of Q first resources plus channel state information of one third resource plus channel state information of the Q first resources. Alternatively, the format of the first report information sent by the terminal device may be indexes of Q first resources plus channel state information of the Q first resources. Alternatively, the format of the first report information sent by the terminal device may be indexes of Q first resources. The fourth resource is included in the Q first resources. Alternatively, the Q first resources are first Q first resources in the at least one first resource in descending order of channel quality. Specifically, reporting may alternatively be performed in a differential report manner.

It may be understood that step 530 is an optional step, and is represented by using a dashed line in FIG. 6.

In the foregoing technical solutions, the at least one first resource may be a part of resources with good channel quality in the resources. Channel quality of a beam is measured based on the received information about the at least one first resource, so that a beam measurement delay can be reduced.

The following describes possible communication apparatuses provided in embodiments of this application.

FIG. 7 to FIG. 11 are diagrams of possible structures of communication apparatuses according to embodiments of this application.

FIG. 7 is a block diagram of a communication apparatus 600 according to an embodiment of this application.

As shown in FIG. 7, the communication apparatus 600 includes a transceiver unit 610 and a processing unit 620.

The communication apparatus 600 may be configured to implement functions of the terminal device or the network device in the method embodiment shown in FIG. 6.

When the communication apparatus 600 is configured to implement the functions of the terminal device in the method embodiment shown in FIG. 6, the transceiver unit 610 may be configured to perform step 510 in FIG. 6, to receive first indication information, where the first indication information includes information about at least one first resource. The processing unit 620 may be configured to perform step 520 in FIG. 6, to perform measurement based on the information about the at least one first resource. The transceiver unit 610 may be further configured to perform step 530 in FIG. 6, to send first report information when a first condition is met, where the first report information includes information about a fourth resource, and the fourth resource is a resource, in the at least one first resource, whose channel quality is better than channel quality of a third resource; and the first condition includes at least one of the following: the channel quality corresponding to the third resource is lower than a first threshold; a channel quality decrement corresponding to the third resource exceeds a second threshold; and channel quality of at least k first resources is better than the channel quality of the third resource, where k is a positive integer.

When the communication apparatus 600 is configured to implement the functions of the network device in the method embodiment shown in FIG. 6, the transceiver unit 610 may be configured to perform step 510 in FIG. 6, to send first indication information, where the first indication information includes information about at least one first resource. The transceiver unit 610 may be further configured to perform step 530 shown in FIG. 6, to receive first report information, where the first report information includes information about a fourth resource, and the fourth resource is a resource, in the first resource, whose channel quality is better than channel quality of a third resource.

For more detailed descriptions of the transceiver unit 610 and the processing unit 620, directly refer to related descriptions in the method embodiment shown in FIG. 6. Details are not described herein.

FIG. 8 is another block diagram of a communication apparatus 700 according to an embodiment of this application.

As shown in FIG. 8, the communication apparatus 700 includes a sending unit 710 and a receiving unit 720.

It may be considered that FIG. 8 is a detailed diagram of the transceiver unit 610 in FIG. 7. For example, when configured to implement functions of the terminal in the method embodiment shown in FIG. 6, the receiving unit 720 may be configured to perform step 510 in FIG. 6, to receive first indication information, where the first indication information includes information about at least one first resource. The sending unit 710 may be further configured to perform step 530 in FIG. 6, to send first report information when a first condition is met, where the first report information includes information about a fourth resource, and the fourth resource is a resource, in the at least one first resource, whose channel quality is better than channel quality of a third resource; and the first condition includes at least one of the following: the channel quality corresponding to the third resource is lower than a first threshold; a channel quality decrement corresponding to the third resource exceeds a second threshold; and channel quality of at least k first resources is better than the channel quality of the third resource, where k is a positive integer. When configured to implement functions of the network device in the method embodiment shown in FIG. 6, the sending unit 710 may be configured to perform step 510 in FIG. 6, to send first indication information, where the first indication information includes information about at least one first resource. The receiving unit 720 may be configured to perform step 530 shown in FIG. 6, to receive first report information, where the first report information includes information about a fourth resource, and the fourth resource is a resource, in the first resource, whose channel quality is better than channel quality of a third resource.

For more detailed descriptions of the sending unit 710 and the receiving unit 720, directly refer to related descriptions in the method embodiment shown in FIG. 6. Details are not described herein.

The communication apparatus 700 may be configured to implement functions of the network device in the method embodiment shown in FIG. 6.

The sending unit may be configured to perform step 510 in FIG. 6, to send first indication information, where the first indication information includes information about at least one first resource. The receiving unit may be configured to perform step 530 shown in FIG. 6, to receive first report information, where the first report information includes information about a fourth resource, and the fourth resource is a resource, in the first resource, whose channel quality is better than channel quality of a third resource.

For more detailed descriptions of the sending unit 710 and the receiving unit 720, directly refer to related descriptions in the method embodiment shown in FIG. 6. Details are not described herein.

It should be understood that division into the units in embodiments of this application is an example, and is merely logical function division, and there may be another division manner in an actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

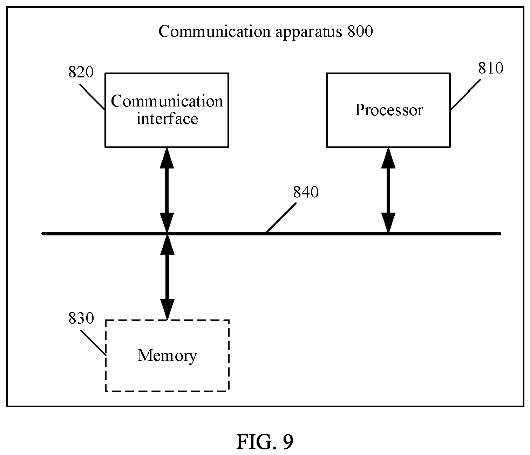

FIG. 9 is still another block diagram of a communication apparatus 800 according to an embodiment of this application. The apparatus 800 may be a chip system, or may be an apparatus configured with a chip system to implement the methods in the foregoing method embodiments. In this embodiment of this application, the chip system may include a chip or may include a chip and another discrete device.

As shown in FIG. 9, the apparatus 800 may include a processor 810 and a communication interface 820. The communication interface 820 may be configured to communicate with another device via a transmission medium, so that the apparatus 800 may communicate with the another device. The communication interface 820 may be, for example, a transceiver, an interface, a bus, a circuit, or an apparatus that can implement a transceiver function. The processor 810 may input and output data through the communication interface 820, and is configured to implement the beam measurement method in the embodiment corresponding to FIG. 6. Specifically, the apparatus 800 may be configured to implement functions of the network device or the terminal device in the foregoing method embodiments. The apparatus 800 may be a chip. It may be understood that when the apparatus 800 is the chip, the communication interface may be an input/output interface. The input interface is configured to perform a receiving step in this embodiment. For example, first indication information is received through the input interface, and first report information is received through the input interface. The output interface is configured to perform a sending step in this embodiment. For example, first indication information is sent through the output interface, and first report information is sent through the input interface.

Optionally, the apparatus 800 further includes at least one memory 830, configured to store program instructions and/or data. The memory 830 is coupled to the processor 810. The coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory 830 may be included in the processor 810. At least one of the at least one memory 830 may be built in the communication apparatus 800. At least one of the at least one memory 830 may be disposed outside the communication apparatus 800. Therefore, as shown in FIG. 9, the memory 830 is represented by using a dashed line.

A specific connection medium between the processor 810, the communication interface 820, and the memory 830 is not limited in this embodiment of this application. In this embodiment of this application, in FIG. 9, the processor 810, the communication interface 820, and the memory 830 are connected through a bus 840. The bus 840 is represented by a bold line in FIG. 9. A connection manner between other components is merely an example for description, and is not limited thereto. The bus may be classified into an address bus, a data bus, a control bus, and the like. For ease of representation, only one bold line is used for representation in FIG. 9, but this does not mean that there is only one bus or only one type of bus.

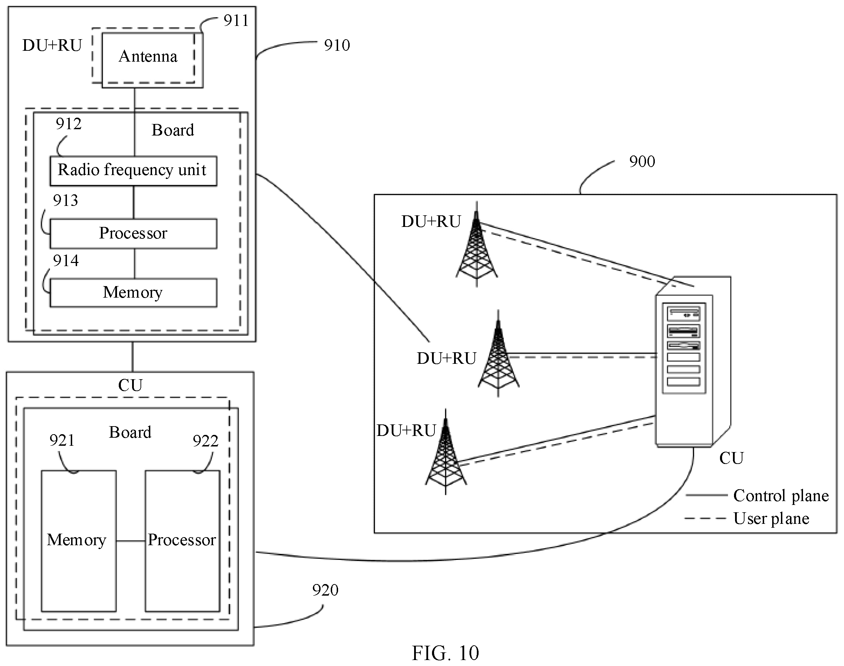

FIG. 10 is a diagram of a structure of a network device according to an embodiment of this application, for example, may be a diagram of a structure of a base station, and the base station is an example of the network device. As shown in the figure, the base station 900 may include one or more DUs 910 and one or more CUs 920. The CU 920 may communicate with a next generation core (NG core, NC) network. The DU 910 may include at least one antenna 911, at least one radio frequency unit 912, at least one processor 913, and at least one memory 914. The DU 910 is mainly configured to: send and receive a radio frequency signal, perform conversion between the radio frequency signal and a baseband signal, and perform partial baseband processing. The CU 920 may include at least one processor 922 and at least one memory 921. The CU 920 and the DU 910 may communicate with each other through an interface. A control plane (control plane, CP) interface may be Fs-C, for example, F1-C, and a user plane (user plane, UP) interface may be Fs-U, for example, F1-U.

The CU 920 is mainly configured to: perform baseband processing, control the base station, and the like. The DU 910 and the CU 920 may be physically disposed together, or may be physically separated, that is, in a distributed base station. The CU 920 is a control center of the base station, may also be referred to as a processing unit, and is mainly configured to complete a baseband processing function. For example, the CU 920 may be configured to control the base station to perform the method performed by the network device in the embodiment shown in FIG. 6.

In an instance, the CU 920 may include one or more boards, and a plurality of boards may jointly support a radio access network (for example, a 5G network) of a single access standard, or may separately support radio access networks (for example, an LTE network, a 5G network, or another network) of different access standards. The memory 921 and the processor 922 may serve one or more boards. In other words, a memory and a processor may be disposed on each board. Alternatively, a plurality of boards may share a same memory and a same processor. In addition, a necessary circuit may be further disposed on each board. The DU 910 may include one or more boards, and a plurality of boards may jointly support a radio access network (for example, a 5G network) of a single access standard, or may separately support radio access networks (for example, an LTE network, a 5G network, or another network) of different access standards. The memory 914 and the processor 913 may serve one or more boards. In other words, a memory and a processor may be disposed on each board. Alternatively, a plurality of boards may share a same memory and a same processor. In addition, a necessary circuit may be further disposed on each board.

It should be understood that, the base station 900 shown in FIG. 10 is merely a possible architecture of the network device, and shall not constitute any limitation on this application. The methods provided in this application are applicable to a network device in another architecture, for example, a network device including a CU, a DU, and an active antenna processing unit (active antenna unit, AAU). A specific architecture of the network device is not limited in this application.

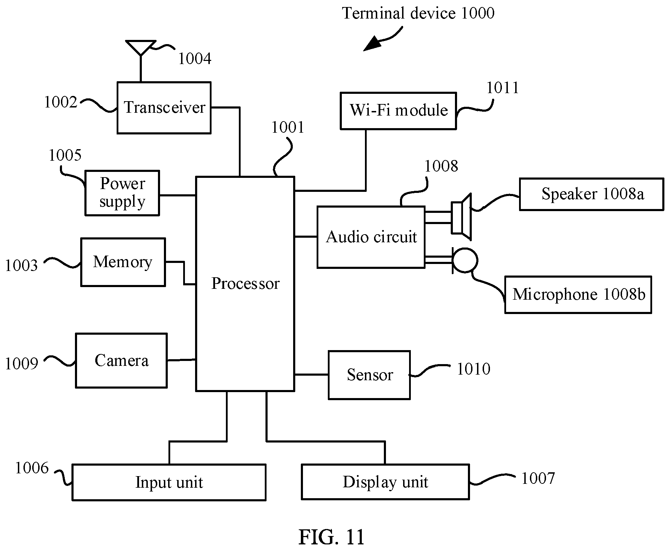

FIG. 11 is a diagram of a structure of a terminal device 1000 according to an embodiment of this application. The terminal device 1000 may be configured to implement the steps performed by the terminal device in the embodiment shown in FIG. 6. As shown in FIG. 11, the terminal device 1000 includes a processor 1001 and a transceiver 1002.

Optionally, the terminal device 1000 further includes a memory 1003. The processor 1001, the transceiver 1002, and the memory 1003 may communicate with each other through an internal connection path, to transmit a control signal and/or a data signal. The memory 1003 is configured to store a computer program. The processor 1001 is configured to invoke the computer program from the memory 1003 and run the computer program, to control the transceiver 1002 to receive a signal and send a signal.

Optionally, the terminal device 1000 may further include an antenna 1004, configured to send, by using a radio signal, uplink data or uplink control signaling output by the transceiver 1002. Optionally, the terminal device 1000 further includes a Wi-Fi module 1011, configured to access a wireless network.

The processor 1001 and the memory 1003 may be combined into one processing apparatus, and the processor 1001 is configured to execute program code stored in the memory 1003 to implement the foregoing functions. During specific implementation, the memory 1003 may alternatively be integrated into the processor 1001, or may be independent of the processor 1001.

The transceiver 1002 may correspond to the transceiver unit 610 in FIG. 7, the sending unit 710 and the receiving unit 720 in FIG. 8, or the communication interface 820 in FIG. 9. The transceiver 1002 may include a receiver machine (or referred to as a receiver or a receiving circuit) and a transmitter machine (or referred to as a transmitter or a transmitting circuit). The receiver machine is configured to receive a signal, and the transmitter machine is configured to transmit a signal.

Optionally, the terminal device 1000 may further include a power supply 1005, configured to supply power to various devices or circuits in the terminal device 1000.

In addition, to improve functions of the terminal device, the terminal device 1000 may further include one or more of an input unit 1006, a display unit 1007, an audio circuit 1008, a camera 1009, a sensor 1010, and the like, and the audio circuit may further include a speaker 1008a, a microphone 1008b, and the like.

It should be understood that operations and/or functions of the modules in the terminal device 1000 are separately intended to implement the corresponding procedures in the foregoing method embodiments. For details, refer to the descriptions in the foregoing method embodiments. To avoid repetition, detailed descriptions are properly omitted herein.

This application further provides a computer program product. The computer program product includes a computer program (which may also be referred to as code or instructions). When the computer program is run, the method in the embodiment shown in FIG. 6 may be implemented.

This application further provides a computer-readable storage medium. The computer-readable storage medium stores a computer program (which may also be referred to as code or instructions). When the computer program is run, the method in the embodiment shown in FIG. 6 may be implemented.

An embodiment of this application provides a communication system. The system includes the foregoing terminal device and network device.

It should be understood that the processor in embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be further understood that, the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that, in combination with illustrative logical blocks (illustrative logical block) and steps (step) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or a part of the functions of the functional units may be implemented by using software, hardware, firmware, or any combination thereof. When the software is used to implement embodiments, all or a part of embodiments may be implemented in a form of a computer program product. The computer program product includes one or more computer instructions (programs). When the computer program instructions (programs) are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium.

For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), or an optical medium (for example, a digital versatile disc (digital video disc, DVD)), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the technology, or a part of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A beam measurement method, wherein the method comprises:

   receiving first indication information, wherein the first indication information comprises information about at least one first resource; and
   performing measurement based on the information about the at least one first resource.

2. The method according to claim 1, wherein the method further comprises:

   sending first report information when a first condition is met, wherein the first report information comprises information about a fourth resource, and the fourth resource is a resource, in the at least one first resource, whose channel quality is better than channel quality corresponding to a third resource; and
   the first condition comprises at least one of the following:

   the channel quality corresponding to the third resource is lower than a first threshold;
   a channel quality decrement corresponding to the third resource exceeds a second threshold; and
   channel quality corresponding to at least k first resources is better than the channel quality corresponding to the third resource, wherein k is a positive integer.

3. A beam indication method, wherein the method comprises:
   sending first indication information, wherein the first indication information comprises information about at least one first resource.

4. The method according to claim 3, wherein the method further comprises:
   receiving first report information, wherein the first report information comprises information about a fourth resource, and the fourth resource is a resource, in the first resource, whose channel quality is better than channel quality corresponding to a third resource.

5. The method according to any one of claims 1 to 4, wherein
   the first indication information is medium access control-control element MAC-CE signaling.

6. The method according to any one of claims 1 to 5, wherein the first indication information comprises at least one of the following: a resource set corresponding to the at least one first resource, a quantity of the at least one first resource, an index of the at least one first resource, beam information of the at least one first resource, time-frequency resource mapping information of the at least one first resource, power information of the at least one first resource, scrambling index information of the at least one first resource, periodicity information of the at least one first resource, slot information of the at least one first resource, resource configuration information corresponding to the at least one first resource, and report configuration information corresponding to the at least one first resource.

7. The method according to any one of claims 1 to 6, wherein same first information is used for the at least one first resource, and the first information comprises at least one of the following: beam information, time-frequency resource mapping information, power information, scrambling index information, periodicity information, and slot information.

8. The method according to any one of claims 1 to 7, wherein the information about the at least one first resource is used to update information about a resource in a resource set configured by using radio access control RRC signaling; and
the first indication information comprises information about the resource set.

9. The method according to any one of claims 1 to 6, wherein the first indication information comprises information about at least one second resource, and the at least one first resource is associated with the at least one second resource in a one-to-one manner; and
the information about the at least one second resource comprises an index of a resource set corresponding to the at least one second resource and/or an index of the at least one second resource.

10. The method according to claim 9, wherein second information of a second resource associated with each first resource is used for the first resource; or second information of each first resource is determined based on second information of a second resource associated with the first resource.

11. The method according to claim 9, wherein the first indication information further comprises a second information offset, and second information of each first resource is determined based on second information of a second resource associated with the first resource and the second information offset.

12. The method according to claim 10 or 11, wherein the second information comprises at least one of the following: beam information, time-frequency resource mapping information, power information, scrambling index information, periodicity information, and slot information.

13. The method according to claim 2 or 4, wherein information about the third resource is configured by using RRC signaling, or the information about the third resource is comprised in the first indication information, or the third resource is an $n^{th}$ first resource in the at least one first resource, wherein n is a positive integer.

14. The method according to claim 2, 4, or 13, wherein the first report information comprises at least one of the following: an index of the fourth resource, channel state information of the fourth resource, channel state information of the third resource, and an index of the third resource.

15. A communication apparatus, wherein the apparatus comprises:

a transceiver unit, configured to receive first indication information, wherein the first indication information comprises information about at least one first resource; and
a processing unit, configured to perform measurement based on the information about the at least one first resource.

16. The apparatus according to claim 15, wherein

the transceiver unit is further configured to send first report information when a first condition is met, wherein the first report information comprises information about a fourth resource, and the fourth resource is a resource, in the at least one first resource, whose channel quality is better than channel quality corresponding to a third resource; and
the first condition comprises at least one of the following:

the channel quality corresponding to the third resource is lower than a first threshold;
a channel quality decrement corresponding to the third resource exceeds a second threshold; and
channel quality corresponding to at least k first resources is better than the channel quality corresponding to the third resource, wherein k is a positive integer.

17. A communication apparatus, wherein the apparatus comprises:
a transceiver unit, configured to send first indication information, wherein the first indication information comprises information about at least one first resource.

18. The apparatus according to claim 17, wherein
the transceiver unit is further configured to receive first report information, wherein the first report information comprises information about a fourth resource, and the fourth resource is a resource, in the first resource, whose channel quality is better than channel quality corresponding to a third resource.

19. The apparatus according to any one of claims 15 to 18, wherein
the first indication information is medium access control-control element MAC-CE signaling.

**20.** The apparatus according to any one of claims 15 to 19, wherein the first indication information comprises at least one of the following: a resource set corresponding to the at least one first resource, a quantity of the at least one first resource, an index of the at least one first resource, beam information of the at least one first resource, time-frequency resource mapping information of the at least one first resource, power information of the at least one first resource, scrambling index information of the at least one first resource, periodicity information of the at least one first resource, slot information of the at least one first resource, resource configuration information corresponding to the at least one first resource, and report configuration information corresponding to the at least one first resource.

**21.** The apparatus according to any one of claims 15 to 20, wherein same first information is used for the at least one first resource, and the first information comprises at least one of the following: beam information, time-frequency resource mapping information, power information, scrambling index information, periodicity information, and slot information.

**22.** The apparatus according to any one of claims 15 to 21, wherein the information about the at least one first resource is used to update information about a resource in a resource set configured by using radio access control RRC signaling; and
the first indication information comprises information about the resource set.

**23.** The apparatus according to any one of claims 15 to 20, wherein the first indication information comprises information about at least one second resource, and the at least one first resource is associated with the at least one second resource in a one-to-one manner; and
the information about the at least one second resource comprises an index of a resource set corresponding to the at least one second resource and/or an index of the at least one second resource.

**24.** The apparatus according to claim 23, wherein second information of a second resource associated with each first resource is used for the first resource; or second information of each first resource is determined based on second information of a second resource associated with the first resource.

**25.** The apparatus according to claim 23, wherein the first indication information further comprises a second information offset, and second information of each first resource is determined based on second information of a second resource associated with the first resource and the second information offset.

**26.** The apparatus according to claim 24 or 25, wherein the second information comprises at least one of the following: beam information, time-frequency resource mapping information, power information, scrambling index information, periodicity information, and slot information.

**27.** The apparatus according to claim 16 or 18, wherein information about the third resource is configured by using RRC signaling, or the information about the third resource is comprised in the first indication information, or the third resource is an $n^{th}$ first resource in the at least one first resource, wherein n is a positive integer.

**28.** The apparatus according to claim 16, 18, or 27, wherein the first report information comprises at least one of the following: an index of the fourth resource, channel state information of the fourth resource, channel state information of the third resource, and an index of the third resource.

**29.** A communication apparatus, comprising a processor, wherein
the processor is configured to execute a computer program in a memory, to enable the apparatus to implement the method according to any one of claims 1 and 2 or 5 to 14, or implement the method according to any one of claims 3 to 14.

**30.** A computer-readable storage medium, wherein the storage medium stores a computer program or instructions, and when the computer program or the instructions are executed by a computer, the method according to any one of claims 1 and 2 or 5 to 14 is implemented, or the method according to any one of claims 3 to 14 is implemented.

FIG. 1

FIG. 2

| Transmission beam | | | | |
|---|---|---|---|---|
| Reception beam | | | ... | |
| | Reception beam 1 | Reception beam 2 | | Reception beam 8 |
| | Measurement periodicity 1 | Measurement periodicity 2 | | Measurement periodicity 8 |

**FIG. 3**

(a)  (b)

**FIG. 4**

FIG. 5

EP 4 757 387 A1

**FIG. 6**

**FIG. 7**

**FIG. 8**

Communication apparatus 800

820
Communication interface

810
Processor

840

830
Memory

FIG. 9

FIG. 10

Terminal device 1000

FIG. 11

## INTERNATIONAL SEARCH REPORT

| | International application No. |
|---|---|
| | **PCT/CN2024/112705** |

| A. | CLASSIFICATION OF SUBJECT MATTER |
|---|---|
| | H04W24/02(2009.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, 3GPP, CJFD: 波束, 测量, 指示, 配置, 资源, 门限, 阈值, 信道, 质量, 阈值, 报告, 上报, beam, measurement, indicator, configuration, resource, threshold, channel, report

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115913288 A (DATANG MOBILE COMMUNICATIONS EQUIPMENT CO., LTD.) 04 April 2023 (2023-04-04)<br>description, paragraphs [0196]-[0454] | 1-30 |
| X | CN 114222324 A (CHENGDU HUAWEI TECHNOLOGIES CO., LTD.) 22 March 2022 (2022-03-22)<br>description, paragraphs [0082]-[0218] | 1-30 |
| X | CN 112087291 A (CHENGDU HUAWEI TECHNOLOGIES CO., LTD.) 15 December 2020 (2020-12-15)<br>description, paragraphs [0102]-[0135] and [0414]-[0485] | 1-30 |
| X | CN 115175227 A (HUAWEI TECHNOLOGIES CO., LTD.) 11 October 2022 (2022-10-11)<br>description, paragraphs [0077]-[0085] and [0116]-[0229] | 1-30 |
| X | CN 113746573 A (HUAWEI TECHNOLOGIES CO., LTD.) 03 December 2021 (2021-12-03)<br>description, paragraphs [0119]-[0264] and [0319]-[0337] | 1-30 |
| A | WO 2023143581 A1 (VIVO MOBILE COMMUNICATION CO., LTD.) 03 August 2023 (2023-08-03)<br>entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2024** | **20 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/112705**

| Patent document cited in search report | | | Publication date (day/month/year) | Patent family member(s) | | | Publication date (day/month/year) |
|---|---|---|---|---|---|---|---|
| CN | 115913288 | A | 04 April 2023 | WO | 2023051203 | A1 | 06 April 2023 |
| | | | | EP | 4412098 | A1 | 07 August 2024 |
| CN | 114222324 | A | 22 March 2022 | WO | 2020029942 | A1 | 13 February 2020 |
| | | | | CN | 110831047 | A | 21 February 2020 |
| CN | 112087291 | A | 15 December 2020 | WO | 2020248779 | A1 | 17 December 2020 |
| CN | 115175227 | A | 11 October 2022 | WO | 2022206577 | A1 | 06 October 2022 |
| | | | | EP | 4287691 | A1 | 06 December 2023 |
| | | | | US | 2023421273 | A1 | 28 December 2023 |
| CN | 113746573 | A | 03 December 2021 | CA | 3185489 | A1 | 09 December 2021 |
| | | | | WO | 2021244427 | A1 | 09 December 2021 |
| | | | | AU | 2021283545 | A1 | 19 January 2023 |
| | | | | BR | 112022024241 | A2 | 24 January 2023 |
| | | | | KR | 20230014780 | A | 30 January 2023 |
| | | | | EP | 4152653 | A1 | 22 March 2023 |
| | | | | US | 2023125760 | A1 | 27 April 2023 |
| | | | | IN | 202237069967 | A | 28 April 2023 |
| | | | | CN | 116095741 | A | 09 May 2023 |
| | | | | JP | 2023527234 | A | 27 June 2023 |
| WO | 2023143581 | A1 | 03 August 2023 | CN | 116567691 | A | 08 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311158590